# EUROPÄISCHE PATENTSCHRIFT

(11) **EP 4 308 810 B1**
(45) Veröffentlichungstag und Bekanntmachung des Hinweises auf die Patenterteilung: **17.12.2025**
(21) Anmeldenummer: 22716180.9
(22) Anmeldetag: 16.03.2022
(51) Int. Cl.: F03B 3/08, F03B 7/00, F03B 17/06, F03D 3/06

(54) **ENERGIEERZEUGUNGSVORRICHTUNG**
ENERGY GENERATING DEVICE
DISPOSITIF DE PRODUCTION D'ÉNERGIE

(30) Priorität: 17.03.2021 DE 102021106494
(43) Veröffentlichungstag der Anmeldung: 24.01.2024
(73) Patentinhaber: Kuhn, Harald, 49661 Cloppenburg (DE)
(72) Erfinder: Kuhn, Harald, 49661 Cloppenburg (DE)
(74) Vertreter: Eisenführ Speiser
(86) Internationale Anmeldenummer: PCT/EP2022/056897
(87) Internationale Veröffentlichungsnummer: WO 2022/194972

(56) Entgegenhaltungen:
- WO-A1-2013/056322
- WO-A1-2018/112530
- US-A1- 2008 296 905
- US-A1- 2016 169 197

## Beschreibung

Die vorliegende Erfindung betrifft eine Energieerzeugungsvorrichtung zur Erzeugung von Energie aus einem strömenden Fluid, insbesondere aus einem Windstrom und/oder aus einem Wasserstrom. Zudem betrifft die vorliegende Erfindung einen Rotationskörper für eine Energieerzeugungsvorrichtung.

Energieerzeugungsanlagen sind in vielen Formen und Varianten bekannt, die auf unterschiedlichen Grundprinzipien beruhen. Beispielsweise sind Windenergieanlagen bzw. Windkraftanlagen in verschiedenen Formen bekannt, die Energie aus strömendem Wind in Form von elektrischer Leistung oder in Form einer Antriebskraft zum Vortrieb generieren. Daneben sind auch Wasserkraftanlagen in verschiedenen Formen bekannt, die Energie aus strömendem Wasser generieren, beispielsweise aus einer Fluss- oder Meeresströmung.

Solche regenativen Energiesysteme, die Energie aus regenerativen Energiequellen erzeugen, werden an vielen unterschiedlichen Orten und für verschiedene Anwendungszwecke eingesetzt.

Beispielsweise sind Großkraftanlagen für eine großindustrielle Energieerzeugung bekannt, wie auch Kleinkraftanlagen, die beispielsweise dazu eingesetzt werden, mobile Energiespeicher zu laden oder Licht zu erzeugen, usw.

Ein besonderer Einsatzort für solche Energieerzeugungsanlagen sind dabei Schiffe oder Boote. Auf diesen ist es naturgemäß oft windig und die Luft ist durch Sonnenstrahlung vielerorts erwärmt.

Dabei kann es auf Segelbooten erforderlich sein, dass Energie erzeugt werden soll, wobei auch Kleinwindenergieanlagen für solche Zwecke bekannt sind.

Problematisch bei bekannten Kleinwindenergieanlagen ist, dass diese regelmäßig schlecht transportabel sind. Daneben verliert jede Windenergieanlage bei einer Windflaute ihre Fähigkeit Energie zu erzeugen.

Für diesen Einsatzbereich wäre wünschenswert, wenn eine Multifunktionsanlage bereitgestellt wird, beispielsweise für Outdoor-Aktivitäten oder Schiffsanwendungen, mit der nicht nur ein Windstrom, sondern auch ein anderer Fluidstrom ausgenutzt werden kann, wie ein Wasserstrom. Es ist also in anderen Worten ein möglichst breiter Einsatzbereich wünschenswert.

Das Deutsche Patent- und Markenamt hat in der Prioritätsanmeldung folgenden Stand der Technik recherchiert: DE 10 2013 205 781 A1 und FR 2 968 726 A1. Das Dokument DE 10 2013 205 781 A1 betrifft eine Windkraftanlage, die durch eine Auf- und Abbewegung eines Auftriebskörpers in Bewegung versetzbar ist und dadurch Energie zur Erzeugung von elektrischer Energie auf eine Generatorvorrichtung eines bodenseitigen Anlagenteils übertragbar ist. Das Dokument FR 2 968 726 A1 betrifft eine Windkraftanlage mit aufblasbaren Schaufeln. Das Dokument US 2016/169197 A1 zeigt ein weiteres Beispiel einer Windkraftanlage.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung für eine Energieerzeugungsanlage bereitgestellt werden, die neben einem breiten Einsatzbereich auch zu transportieren und leicht zu handzuhaben ist.

Erfindungsgemäß wird somit eine Energieerzeugungsvorrichtung gemäß Anspruch 1 vorgeschlagen, nämlich eine Energieerzeugungsvorrichtung zur Erzeugung von Energie aus einem strömenden Fluid.

Es wird also eine Energieerzeugungsvorrichtung vorgeschlagen, die gespeicherte potentielle Energie aus einem strömenden Fluid in eine andere Energieform wandelt, wie zum Beispiel in elektrische Energie oder in eine Antriebsenergie oder eine Vortriebskraft. Das Fluid kann gasförmig oder flüssig sein. Bevorzugt wird Energie aus einem Windstrom und zusätzlich oder alternativ aus einem Wasserstrom gewonnen. Bevorzugt wird zudem, das Energie in Form einer elektrischen Energie erzeugt wird, es kann aber auch zusätzlich Energie in Form einer Vortriebsenergie gewonnen werden, beispielsweise um Vortrieb für ein Schiff oder Boot zu erzeugen.

Zudem wird vorgeschlagen, dass die Energieerzeugungsvorrichtung wenigstens einen Rotationskörper umfasst, wobei sich der Rotationskörper entlang einer Rotationsachse zwischen einem ersten Punkt und einem zweiten Punkt erstreckt und der Rotationskörper zur Rotation um die Rotationsachse eingerichtet ist.

Es wird also vorgeschlagen, dass sich der Rotationskörper räumlich entlang einer Rotationsachse erstreckt, wobei der erste und der zweite Punkt als verschiedene Raumpunkte aufzufassen sind. Der Rotationskörper erstreckt sich demnach entlang einer Wegstrecke und ist drehbar gelagert. Der Rotationskörper ist beispielsweise als ein länglicher Zylinder ausgebildet, der zur Rotation um die Rotationsachse eingerichtet ist.

Die Rotationsachse kann verschieden ausgerichtet sein, beispielsweise kann die Achse horizontal oder vertikal angeordnet sein und je nach Einsatzort der Energieerzeugungsvorrichtung unterschiedlich sein. Beispielsweise kann die Energieerzeugungsvorrichtung in einem Standbetrieb eine vertikale Rotationsachse aufweisen. In einem weiteren Beispiel kann die Energieerzeugungsvorrichtung in einem Flugbetrieb oder Wasserbetrieb eine horizontale Achse aufweisen.

In einer bevorzugten Ausführungsform weist der Rotationskörper Lagermittel zur rotatorischen Lagerung des Rotationskörpers um die Rotationsachse auf. Beispielsweise kann der Rotationskörper über Gleitlager oder Kugellager mit einer Welle zur rotatorischen Lagerung des Rotationskörpers um die Rotationsachse gelagert sein.

Die Welle ist in einer besonders bevorzugten Ausführungsform als stehende Welle oder als rotierende Welle ausgebildet und mechanisch mit dem Rotationskörper verbunden, beispielsweise fest oder über ein Lagermittel.

Zudem wird vorgeschlagen, dass der Rotationskörper aus wenigstens einem ersten, einem zweiten und einem dritten Rotationssegment ausbildet ist, wobei die Rotationssegmente miteinander verbunden sind und entlang der Rotationsachse angeordneten sind, und einen zumindest teilweise fluidumströmten Bereich ausbilden.

Es wird also vorgeschlagen, dass der Rotationskörper aus mindestens drei oder mehreren bzw. einer Vielzahl von Rotationssegmenten ausgebildet ist.

Die Rotationssegmente sind miteinander verbunden, nämlich bevorzugt direkt benachbart zueinander. Beispielsweise können die Rotationssegmente über eine Trennbarriere mechanisch miteinander verbunden sein, sodass jedes oder mehrere Rotationssegmente eine schließbare und gasdichte Luft- bzw. Gaskammer ausbildet, die in den Rotationssegmenten eingeschlossenes Gas halten. Die Rotationssegmente sind bevorzugt geklebt oder verschweißt ausgebildet. Bei Verwendung anderer Materialien ist die Verbindung der Segmente stabil ausgebildet.

Die Rotationssegmente sind entlang der Rotationsachse angeordnet, also beispielsweise rotationssymmetrisch nebeneinander angeordnet und mechanisch verbunden, sodass die Vielzahl der Rotationssegmente die Form des Rotationskörpers ausbildet, die beispielsweise zylindrisch sein kann. Als mechanische Verbindung wird bevorzugt eine Klebung oder Verschweißung vorgeschlagen.

Mit dieser Anordnung bilden die Rotationssegmente einen zumindest teilweise fluidumströmten Bereich aus.

Der fluidumströmte Bereich ist ein Bereich an einer Oberfläche des Rotationskörpers bzw. an der Oberfläche der Rotationssegmente, an dem das Fluid mit der Oberfläche in Kontakt kommt und daran entlangströmt. Also in anderen Worten ein Bereich, in dem das Fluid auf die Oberfläche der Rotationssegmente trifft bzw. mit der Oberfläche in Kontakt kommt und sich eine vollständige oder teilweise Umströmung des zylindrischen Rotationskörpers ausbildet.

Zudem wird vorgeschlagen, dass das zweite Rotationssegment zwischen dem ersten und dem dritten Rotationssegment angeordnet ist und das zweite Rotationssegment einen differenten Durchmesser aufweist als das erste und dritte Rotationssegment. Es wird also vorgeschlagen, dass wenigstens das zweite Rotationssegment einen anderen bzw. verschiedenen Durchmesser aufweist als das erste oder dritte Rotationselement, die benachbart zum zweiten Rotationssegment angeordnet sind.

Es wird also eine besondere Form des Rotationskörpers vorgeschlagen, die sich aus einem Wechsel von den benachbart angeordneten Rotationssegmenten aufgrund unterschiedlicher Durchmesser entlang der Rotationsachse der Rotationssegmente ergibt.

Es wurde dabei erkannt, dass die vorgeschlagene besondere Form einige vorteilhafte Eigenschaften für den Rotationskörper bewirkt, nämlich beispielsweise, dass ein aerodynamisches Reffen des Rotationskörpers möglich ist.

Reffen bezeichnet dabei den Vorgang, dass die Fläche des Rotationskörpers verkleinert wird, um dem umströmenden Fluid eine geringere Angriffsfläche zu bieten.

Zudem wurde erkannt, dass die Form bzw. die verschiedenen Durchmesser der Rotationssegmente zu einer verbesserten Bewegungsstabilität führen kann und ein vergrößerter umströmter Bereich entsteht und damit die Energieausbeute gesteigert werden kann.

Zudem wird eine mechanisch mit dem Rotationskörper verbundene Generatorvorrichtung vorgeschlagen, wobei die Generatorvorrichtung dazu eingerichtet ist, Energie zu erzeugen, die aus Rotation des Rotationskörpers gewonnen wird, beispielsweise elektrische Energie, Wärmeenergie oder Antriebsenergie.

Es wird also vorgeschlagen, einen Generator zur Energieerzeugung einzusetzen, der mit dem Rotationskörper verbunden ist. Der Generator kann beispielsweise einen drehenden Teil und einen festen Teil aufweisen, die als Rotor und Stator bekannt sind.

Die mechanische Verbindung des Generators kann dabei unterschiedlich erfolgen, beispielsweise über eine direkte Verbindung mit dem Rotationkörper sein, indem der Rotationskörper mit dem Rotor des Generators mechanisch gekoppelt ist oder der Rotationskörper den Rotor ausbildet.

In einer besonders bevorzugten Ausführungsform ist der Generator zur Erzeugung elektrischer Energie ausgebildet, beispielsweise als permanenterregter Wechselstromgenerator ausgebildet, der bevorzugt elektrische Energie in Form einer Leistung pro Zeit in einem Leistungsbereich von 1W bis 50kW erzeugt. Bei einer Verwendung der Energieerzeugungsvorrichtung als Großwindanlagen ist dieser Leistungsbereich entsprechend größer dimensioniert.

In einer weiteren besonders bevorzugten Ausführungsform ist der Generator als Innenläufer oder Außenläufer ausgebildet und weist ein elektrisches Anschlussmittel auf, um eine elektrische Verbindung mit einem elektrischen Verbraucher oder einem elektrischen Speicher herstellen zu können und die erzeugte Energie zu verbrauchen oder zu speichern.

Das vorgeschlagene Konzept ist grundsätzlich unter Berücksichtigung physikalischer Grenzen auch auf höhere Leistungsbereiche skalierbar. Das Konzept wird in bevorzugter Ausführungsform als Kleingenerator vorgeschlagen, um beispielsweise elektrische Verbraucher zu betreiben oder elektrische Speicher zu laden, wie Mobiltelefone, Funkgeräte, LED-Leuchtmittel, Powerbanks, Wasserkocher. Der Anwendungsbereich ist also ausgedehnt.

Die Rotationssegmente sind bevorzugt zylindrisch oder ringförmig ausgebildet, also wie eine Scheibe mit einer Scheibendicke oder wie ein Hohlzylinder.

Die Rotationssegmente schließen vorzugsweise in ihrem Inneren ein Raumvolumen ein, das beispielsweise mit Luft oder Helium gefüllt ist und bestehen in dieser Form aus Hohlräumen. Die Rotationssegmente können ebenfalls aus elastisch verformbaren Materialien ausgebildet sein, wie beispielhaft formelastische Polymere oder origamiartigen Faltgewebe. Die Rotationssegmente können selbsttragend ausgebildet sein oder mit einer Tragkonstruktion gestützt sein, also beispielsweise als ein gasgefüllter Folienzylinder ausgebildet sein.

In einer besonders bevorzugten Ausführungsform sind die Rotationssegmente aus wenigstens einer reißfesten und dünnschichten Kunststofffolie oder Kunststoffschicht ausgebildet, um einen besonders leichten Rotationskörper bereitzustellen.

In einer weiteren Ausführungsform können die Rotationssegmente vollständig oder teilweise gasleitend miteinander verbunden sein, sodass entsprechend alle Rotationssegmente miteinander verbunden oder nur einige miteinander verbunden sind.

Vorzugsweise weist das erste Rotationssegment einen ersten Durchmesser, das zweite Rotationssegment einen zweiten Durchmesser und das dritte Rotationssegment einen dritten Durchmesser auf, wobei der erste Durchmesser größer ist als der zweite Durchmesser und der dritte Durchmesser dem ersten Durchmesser entspricht, insbesondere um eine zylinderförmige Baumkuchenform des Rotationskörpers auszubilden. Eine solche Form des Rotationskörpers, bei der sich der Durchmesser benachbarter Rotationssegmente wiederholend abwechselt, wird als eine Baumkuchenform bezeichnet oder bei drei Rotationssegmenten als Hantelform. Entlang der Wegstrecke zwischen dem ersten und dem zweiten Punkt des Rotationskörpers entsteht somit eine Art Wellenform, die Berge und Täler aufweist und sich aus einem Durchmesserwechsel der Rotationssegmente ergibt, die beispielsweise ringförmig oder scheibenförmig ausgebildet sind. Durch diese Form ist ein besonders einfaches und aerodynamisches Reffen möglich, da sich die Rotationssegmente mit einem größeren Durchmesser auf Rotationssegmente mit einem kleineren Durchmesser ablegen, womit Faltungen der Rotationssegmente verringert werden, die einer aerodynamischen Form abträglich sind. Zudem wird durch den abwechselnden Durchmesserverlauf erreicht, dass sich die Energieerzeugungsvorrichtung stabiler im Fluid hält als beispielsweise ein einfacher Zylinder ohne den abwechselnden Durchmesserverlauf. Aufgrund der besonderen Bauchkuchenform.

Zusätzlich oder alternativ wird vorgeschlagen, dass der erste Durchmesser kleiner ist als der zweite Durchmesser und der dritte Durchmesser dem ersten Durchmesser entspricht, insbesondere um eine elliptische Form oder flache Diamantenform des Rotationskörpers auszubilden. Eine solche Form des Rotationskörpers, bei der sich der Durchmesser von einer Mitte des Rotationskörpers nach außen verkleinert, wird als eine elliptische Form oder Diamantenform bezeichnet, wobei die elliptische Form auch als Kugelform oder Rundform bezeichnet werden kann und die Diamantenform als Dreiecksform. Entlang der Wegstrecke zwischen dem ersten und dem zweiten Punkt des Rotationskörpers entsteht somit je nach Anzahl von Rotationssegmenten eine elliptische Form oder flache Diamantenform. Der Durchmesser des Rotationsköpers nimmt also zuerst entlang der Wegstrecke zwischen dem ersten und zweiten Punkt zunächst zu, nämlich bis zum Erreichen des zweiten Rotationselements, und nimmt dann wieder ab.

Zusätzlich oder alternativ wird vorgeschlagen, dass der erste Durchmesser größer ist als der zweite Durchmesser und der zweite Durchmesser größer ist als der dritte Durchmesser, insbesondere um eine Kegelform des Rotationskörpers auszubilden. Der Durchmesser des Rotationskörpers nimmt also in eine Richtung zu oder ab, je nach Ausrichtung des Rotationskörpers. Die Kegelform kann auch als Trapezform aufgefasst werden. Durch die Kegelform wird erreicht, dass der Schwerpunkt des Rotationskörpers an einer vorbestimmten Stelle liegt. Beispielsweise kann so ein Schwerpunkt in einem Standbetrieb der Energieerzeugungsvorrichtung eingestellt werden, der nah am Boden liegt, so dass die Vorrichtung einen stabileren Stand aufweist.

Es versteht sich in allen zuvor beschrieben Fällen, dass die Form des Rotationskörpers von der Anzahl der Rotationselemente abhängig ist und auch Mischformen realisierbar sind.

Zusätzlich oder alternativ wird vorgeschlagen, dass die Rotationssegmente ringförmig ausgebildet sind, insbesondere um den Rotationskörper hohl auszubilden und eine offene Tonnenform bereitzustellen, wobei die ringförmigen Rotationssegmente über eine Tragkonstruktion zur Befestigung des Rotationskörpers an einer rotierenden Achse befestigt sind. Es wird also vorgeschlagen, die Rotationssegmente zur Gewichtseinsparung und zum einfacheren Transport ringförmig auszubilden. Es versteht sich, dass eine Tragkonstruktion aus Tragelementen vorgesehen ist, um den Rotationskörper rotatorisch zu lagern.

In einer besonders bevorzugten Ausführungsform ist der Rotationskörper bzw. sind die Rotationssegmente derart ausgebildet, dass der Rotationskörper eine im Wesentlichen längliche Zylinderform aufweist.

Vorzugsweise wird vorgeschlagen, dass der Rotationskörper aus mehr als fünf Rotationssegmenten ausgebildet ist, vorzugsweise aus mehr als 10 Rotationssegmenten, wobei die jeweils direkt benachbarten Rotationssegmente jeweils einen unterschiedlichen Durchmesser aufweisen, um insbesondere eine der zuvor beschriebenen Formen des Rotationskörpers auszubilden. Es wird also in bevorzugter Form eine Verwendung von einer Vielzahl von aneinandergereihten Rotationssegmenten vorgeschlagen, wobei jeweils die direkt benachbarten Rotationssegmente jeweils einen unterschiedlichen Durchmesser aufweisen. Beispielsweise können neun Rotationssegmente verwendet werden, wobei ein erstes, drittes, fünftes, siebtes und neuntes Rotationssegment einen gleichen ersten Durchmesser aufweisen und das zweite, vierte, sechste, achte Rotationssegment einen gleichen zweiten Durchmesser aufweisen, der kleiner ist als der erste Durchmesser. So einsteht durch den abwechselnden Durchmesserwechsel der zylindrischen Rotationssegmente eine Baumkuchenform.

Vorzugsweise wird vorgeschlagen, dass der Rotationskörper selbstanlaufend ausgebildet ist. Selbstanlaufend ist dabei so zu verstehen, dass der Rotationskörper ohne einen zusätzlichen Antrieb oder Krafteinwirkung aus einem Stillstand in einen Rotationszustand übergeht, wobei der Rotationszustand durch das Fluid bewirkt wird, das entlang des fluidumströmten Bereiches strömt.

In einer bevorzugten Ausführungsform weist wenigstens eines der Rotationssegmente wenigstens zwei in Bezug auf die Rotationsachse gegenüberliegende Anlaufelemente zur Erhöhung eines Fluidwiderstandes im fluidumströmten Bereich auf. Es wird also vorgeschlagen, dass wenigstens eines der Rotationssegmente wenigstens zwei Mittel aufweist, die einen Fluidwiderstand des Rotationskörpers erhöhen. Der Fluidwiderstand kann auch als Strömungswiderstand bezeichnet werden.

Das Anlaufelement weist dabei in einer weiteren Ausführungsform eine fluidzugewandte Seite und eine fluidabgewandte Seite auf, wobei die fluidzugewandte Seite einen höheren Fluidwiderstand aufweist als die fluidabgewandte Seite. Es wird also vorgeschlagen, die Anlaufmittel so auszubilden, dass ein Selbstanlauf auch dann möglich ist, wenn das Fluid sowohl an einer Oberseite als auch an einer Unterseite des Rotationskörpers gleichmäßig entlang des fluidumströmten Bereiches strömt.

Beispielsweise können die Anlaufelemente schaufelförmig oder flügelförmig ausgebildet sein, und eine näherungsweise konkav ausgebildete fluidzugewandte Seite und eine näherungsweise konvex fluidabgewandte Seite aufweisen, und als Flügel, Laschen oder andersartige Vorrichtung ausgebildet sein.

In einer besonders bevorzugten Ausführungsform weist wenigstens ein Rotationssegment eine Vielzahl von Anlaufelementen auf, die über einen gesamten Umfang des wenigstens einen Rotationssegments angeordnet sind, beispielsweise zwölf oder mehr Anlaufelemente. Mit einer Vielzahl von Anlaufelementen wird erreicht, dass die Form der Rotationssegmente bzw. des Rotationssegmentes im Wesentlichen kreisförmig ist und insbesondere der Magnus-Effekt effizienter ausgenutzt werden kann. Es können aber auch mehrere Rotationssegmente oder alle Rotationssegmente eine Vielzahl von Anlaufmitteln aufweisen.

Vorzugsweise wird vorgeschlagen, dass der Rotationskörper reffbar ausgebildet ist.

Dies wird in einer bevorzugten Ausführungsform erreicht, indem wenigstens eins der Rotationssegmente gasgefüllt ausgebildet ist und in einem Innenbereich des wenigstens einen gasgefüllten Rotationselementes in einem ungerefften Zustand ein größerer Druck vorliegt als ein Umgebungsdruck und ein Reffen durch einen Gasaustausch bewirkt wird. Es wird also vorgeschlagen einen höheren Druck innerhalb der Rotationssegmente zu erzeugen als ein atmosphärischer Außendruck in dem Einsatzgebiet der Energieerzeugungsvorrichtung. Damit ist der Rotationskörper selbsttragend ausgebildet. Ein Reffen kann dann beispielsweise erfolgen, indem die einzelnen Rotationssegmente über ein oder mehrere Ventile mit einem Gas befüllt werden, insbesondere mit Druckluft oder Helium. Die selbstragende Ausführung des Rotationskörpers ist dabei besonders vorteilhaft in Bezug auf den Transport der Energieerzeugungsvorrichtung, da beispielsweise das Gas einfach aus den Rotationssegmenten abgelassen werden kann, um die Energieerzeugungsvorrichtung zu komprimieren und kleinvolumig zu transportieren. Durch die Möglichkeit Gas einzulassen oder abzulassen, kann der Rotationskörper somit gerefft werden und ist demnach reffbar ausgebildet.

In einer zusätzlichen oder alternativen Ausführungsform ist der Rotationskörper zum Reffen ausgebildet, indem wenigstens eins der Rotationssegmente mit einem Memoryschaum gefüllt ausgebildet ist, der in einem ungerefften Zustand unkomprimiert ist und in den unkomprimierten Zustand strebt, wenn eine Krafteinwirkung auf den Memoryschaum ausgeübt wird, insbesondere durch ein Reffmittel. Damit ist der Rotationskörper selbstragend ausgebildet. Ein Reffen kann dann beispielsweise erfolgen, indem der elastische Memoryschaum mit einem Reffmittel komprimiert wird, und wenn ein Reffen nicht mehr gewünscht ist, nimmt der Memoryschaum seine vorherige Form wieder an. In einem Beispiel kann der Memoryschaum wie ein Schwamm durch eine Krafteinwirkung komprimiert werden und wenn die Krafteinwirkung wieder gelöst wird, entfaltet sich der Schwamm bzw. der Memoryschaum wieder.

In einer zusätzlichen oder alternativen Ausführungsform ist der Rotationskörper zum Reffen ausgebildet, indem wenigstens eins der Rotationssegmente mit einer faltbaren und elastische Gitterstruktur ausgebildet ist, die in einem ungerefften Zustand unkomprimiert ist und in den unkomprimierten Zustand strebt, wenn eine Krafteinwirkung auf die Gitterstruktur ausgeübt wird, insbesondere durch ein Reffmittel. Damit ist der Rotationskörper selbstragend ausgebildet. Ein Reffen kann dann beispielsweise erfolgen, indem die Gitterstruktur mit einem Reffmittel komprimiert wird, und wenn ein Reffen nicht mehr gewünscht ist, nimmt der Memoryschaum seine vorherige Form wieder an. Die faltbare Gitterstruktur kann auch als origamiartige Struktur aufgefasst werden. In weiteren mit Visco- oder Memoryschaum ausgebildeten Rotationskörpern werden die Segmente reversibel wiederholbar durch Kompression gerefft.

Es versteht sich, dass ein Reffen mit einem Memoryschaum und zusätzlich oder alternativ mit der Gitterstruktur auch bewirkt werden kann, wenn die beiden Materialien in einen komprimierten Zustand streben. Dann wird das wenigstens eine Rotationssegment mit einem Spannmittel aufgespannt und durch ein Lösen des Spannmittels komprimieren sich das Rotationssegment wieder. So kann ebenfalls ein Reffen bewirkt werden.

Vorzugsweise wird zudem vorgeschlagen, dass der Rotationskörper ein Reffmittel aufweist mit dem der fluidumströmte Bereich der gasgefüllten Rotationssegmente verstellbar ist. Es wird also vorgeschlagen, dass der fluidumströmte Bereich verkleinert werden kann, beispielsweise vor dem Betrieb oder während des Betriebs der Energieerzeugungsvorrichtung. Wie zuvor beschrieben, bezeichnet Reffen den Vorgang, dass die Fläche des Rotationskörpers verkleinern wird, um dem umströmenden Fluid eine geringere Angriffsfläche zu bieten. Damit kann in vorteilhafterweise die Energieerzeugungsvorrichtung an die aktuellen Bedingungen und Strömungsgeschwindigkeiten des Fluid angepasst werden, und beispielsweise die Energieerzeugungsvorrichtung auch bei Sturm betrieben oder in sehr starken Wasserströmungen betrieben werden. Das Reffmittel kann auch ein Spannmittel sein, mit dem ein Reffen bewirkt wird, wie zuvor beschrieben.

Vorzugsweise wird als Reffmittel ein mechanisches Verbindungmittel vorgeschlagen, das dazu eingerichtet ist, das erste und das dritte Rotationssegment mechanisch zu verbinden. Das mechanische Verbindungmittel kann dabei beispielsweise als Knopfsystem, Hackensystem oder Laschensystem ausgebildet sein, das eine mechanische Verbindung zwischen dem ersten und dem dritten Rotationssegment herstellt.

Zusätzlich oder alternativ wird als Reffmittel ein Zugkraftsystem vorgeschlagen, das dazu eingerichtet ist, wenigstens eines der gas- oder materialgefüllten Rotationssegmente entlang der Rotationsachse mittels einer Zugkraft zu komprimieren. Es wird also vorgeschlagen, dass die Länge der Rotationssegmente durch ein System verändert wird, das mit einem Zugkraftsystem arbeitet und an oder innerhalb des Rotationskörpers angeordnet ist. Das Zugseilsystem ist bevorzugt als ein Seilzugsystem ausgebildet oder als ein Stangensystem oder als ein hydraulisches System, oder als ein elektrisches System. Beispielsweise ist das Seilzugsystem als eine angetriebene Seilwinde ausgebildet, die ein Seilelement auf- oder abwickelt, wobei ein Ende des Seilelementes an einem Rotationssegment befestigt ist. Vorteilhaft an dieser Art des Reffens ist, dass ein Reffen im Betrieb aus der Ferne möglich ist.

In einer besonderen Ausführungsform ist das Zugkraftsystem dazu eingerichtet, aus der Ferne betrieben zu werden, und weist dazu einen Empfänger auf.

Zusätzlich oder alternativ wird als Reffmittel ein Ventilsystem vorgeschlagen, das dazu eingerichtet ist, eine Veränderung des fluidumströmten Bereiches mittels Einlassen oder Auslassen eines Gases aus dem gasgefüllten Hohlraum oder aus dem Memoryschaum zu bewirken.

In einer besonderen Ausführungsform weist das Ventilsystem eine Überdruckauslösung auf, um das Gas bei Vorliegen eines vorbestimmten Überdrucks automatisch abzulassen.

Alle vorgeschlagen Reffmittel können miteinander kombiniert werden, beispielsweise kann das Gas aus dem zweiten Rotationssegment mit dem Ventilsystem entlassen werden und das erste und das dritte Rotationssegment mechanisch mit dem mechanischen Verbindungmittel verbunden werden. Sind die mechanischen Verbindungmittel beispielsweise als Druckknöpfe ausgebildet, kann mit einem zusätzlichen Zugkraftsystem ein Verschließen der Druckknöpfe bewirkt werden.

Vorzugsweise wird vorgeschlagen, dass wenigstens eines der Rotationssegmente mit einem Gas gefüllt ist, dessen Dichte kleiner ist als Luft, um eine Auftriebskraft des Rotationskörpers zu erzeugen und einen Flugbetrieb einzustellen. In einer bevorzugten Ausführungsform wird als Gas Helium verwendet. Es wird also vorgeschlagen, dass die Rotationssegmente in ihrem Innenraum mit einem auftriebserzeugenden Gas befüllt werden und anschließend mit einer entsprechenden Aufhängung und einem Seilsystem in einem Flugbetrieb genutzt werden können.

In einer weiteren besonders bevorzugten Ausführungsform weist der Rotationskörper eine Aufhängung auf, an die ein Seilsystem befestigbar ist, um einen Flugbetrieb einzustellen, wobei insbesondere über das Seilsystem einen elektrischen Leiter aufweisen kann, um elektrische Energie in Form eines Stromes und/oder einer Spannung abzuleiten, oder der Rotationskörper als Vortriebssystem genutzt wird, zum Ziehen eines Schiffes über ein Verbindungselement. Das Seilsystem ist beispielsweise als zusammengeführtes reissfestes Seil oder als zwei oder mehrere unabhängig befestigte reissfeste Seile ausgebildet.

Vorzugsweise wird zudem vorgeschlagen, dass wenigstens eines der Rotationssegmente aufblasbar ausgebildet sind. Es wird also vorgeschlagen, dass ein Gas in wenigstens einem Rotationssegment eingeleitet werden kann.

In einer bevorzugten Ausführungsform wird vorgeschlagen, eine Aufblasbarkeit bereitzustellen, indem wenigstens ein Rotationssegment, insbesondere alle Rotationssegmente, ein Ventil zum Einleiten und Ausleiten eines Gases aufweist, insbesondere zum Einleiten und Ausleiten von Luft oder Helium. Es wird demnach also vorgeschlagen, dass in jedes Rotationssegment Gas über ein Ventil ein- oder ausgeleitete werden kann. Sind beispielsweise alle Rotationssegmente verbunden, kann nur ein Ventil vorgesehen sein. Sind die Rotationssegmente nur teilweise gasaustauschend verbunden, sind entsprechend mehrere Ventile vorgesehen.

Vorzugsweise wird vorgeschlagen, dass die Komponenten des Rotationskörpers derart ausgebildet sind, dass ein Flugbetrieb und ein Wasserbetrieb mit dem Rotationskörper einstellbar ist, wobei dazu die Rotationssegmente des Rotationskörpers aus einer widerstandsfähigen Leichtbaumaterial ausgebildet sind, wie beispielsweise für den Flugbetrieb eine dünnwandige Kunststofffolie oder ein gleichartiges widerstandsfähiges und reißfestes Material. Es wird also vorgeschlagen, die Komponenten möglichst leicht und wetterwiderstandfähig auszubilden.

Zusätzlich oder alternativ wird vorgeschlagen, dass die Generatorvorrichtung gekapselt ausgebildet ist, also wasserfest bzw. wasserdicht ausgebildet ist. Es wird also vorgeschlagen, die Energieerzeugungsvorrichtung zusätzlich auch wasserfest auszubilden. Damit wird in vorteilhafter Weise ein breiter Anwendungsbereich eröffnet und ein Einsatz bei Regen, über oder auf dem Wasser bereitgestellt.

Vorzugsweise wird vorgeschlagen, dass eine Fluidnachführungsvorrichtung vorgesehen ist, die dazu eingerichtet ist, den Rotationskörper einem veränderlichen Fluidstrom nachzuführen. Es wird also vorgeschlagen ein Nachführungssystem einzusetzen, um die Energieerzeugungsvorrichtung bzw. den Rotationskörper einem veränderlichen Fluidstrom nachzuführen, wie beispielsweise einer veränderlichen Windrichtung. Zusätzlich oder alternativ wird vorgeschlagen, dass eine Stabilisationsvorrichtung vorgesehen ist, die dazu eingerichtet ist, den Rotationskörper bewegungsstabil in dem Fluidstrom zu halten. Als besonders einfache Form einer Stabilitäts- und Fluidnachführungsvorrichtung kann beispielsweise ein Schwanz oder ein Seitenruder an der Energieerzeugungsvorrichtung vorgesehen sein, wie beispielsweise von Kites oder Drachen bekannt.

Vorzugsweise wird vorgeschlagen, dass die Generatorvorrichtung einen rotierenden Teil und einen feststehenden Teil aufweist, wobei der rotierende Teil mit dem Rotationskörper mechanisch verbunden ist und der stehende Teil Befestigungsmittel zur Befestigung an einer Bodenkonstruktion oder an einem Seilsystem aufweist, dass beispielsweise aus einem, zwei oder mehreren Seilen besteht. Es wird demnach vorgeschlagen, dass der rotierende Teil der Generatorvorrichtung direkt mit dem rotierenden Rotationskörper oder der Rotationskörper den Rotor des Generators ausbildet und eine mechanische Einheit bilden. An dem Generator ist also ein Befestigungselement vorgesehen, dass einen Standbetrieb ermöglicht oder für Flug- oder Wasserbetrieb vorgesehen ist.

In einer besonders bevorzugten weiteren Ausführungsform ist an dem Rotationskörper ein Befestigungsmittel zur Befestigung an einer Bodenkonstruktion oder an einem Seilsystem angeordnet.

Erfindungsgemäß ist die Generatorvorrichtung mechanisch über ein Zugseilsystem mit dem Rotationskörper verbunden, um elektrische Energie aus einer durch die Rotation des Rotationskörpers entstehende Auftriebskraft und zusätzlich oder alternativ Vortriebskraft zu gewinnen. Es wird demnach vorgeschlagen, den Rotationskörper und die Generatorvorrichtung getrennt voneinander auszubilden und über ein Seilsystem zu verbinden. Dabei wird vorgeschlagen den Magnus-Effekt auszunutzen, der durch die Rotation des Rotationskörpers eine nach oben gerichtet Auftriebskraft erzeugt, wenn beispielsweise Wind frontal auf den Rotationskörper trifft. Diese nach oben gerichtete Kraft kann durch ein mit der Generatorvorrichtung verbundenes Seilsystems zur Energieerzeugung genutzt werden. Ist das Seil vollständig abgewickelt, erfolgt ein Reffen, der dazu führt, dass das System abfällt und der Vorgang erneut gestartet werden kann. Somit wird vorgeschlagen, das die Energieerzeugungsvorrichtung als Zugdrachen mit einem Seil oder mehreren Seilen genutzt wird, dass an die Generatorvorrichtung angeschlossen ist. Zudem ist eine Aufhängung oder Ablagevorrichtung zur Aufnahme des Rotationskörpers für den Flugbetrieb vorgesehen.

Vorzugsweise wird vorgeschlagen, dass die Generatorvorrichtung permanenterregt ausgebildet ist und dazu eingerichtet ist, einen erzeugten Strom an einem elektrischen Anschluss abzugeben, und der Generator in einer weiter bevorzugten Ausführungsform als Außenläufer ausgebildet ist.

Erfindungsgemäß weist der Rotationskörper ein Rotationserzeugungsmittel auf, um den Rotationskörper in eine vorbestimmte Rotation zu versetzen oder zu halten, wobei das Rotationserzeugungsmittel dazu eingerichtet ist, einen rotatorischen Drehimpuls des Rotationskörpers zu bewirken. Es wird also ein Vortriebsmittel vorgeschlagen, dass dazu vorgesehen ist, den Rotationskörper in einer vorbestimmten Rotation zu halten oder diese zu beschleunigen. Dem liegt die Erkenntnis zu Grunde, dass der Magnus-Effekt mit einer vorbestimmten Rotationsgeschwindigkeit zur Energiegewinnung effektiver ausnutzbar ist.

Gemäß einer Alternative der Erfindung ist das Rotationserzeugungsmittel als eine gerichtete Düse ausgebildet, die einen erzeugten Überdruck aus einem Innenbereich eines Rotationssegmentes auslässt. Es wird also vorgeschlagen, dass an der Oberfläche der Rotationssegmente eine Düse angeordnet ist, die gerichtet in eine gewünschte Richtung einen Drehimpuls bewirkt, wenn das Gas aus dem Inneren der Rotationssegmente strömt.

Zusätzlich oder alternativ ist das Rotationserzeugungsmittel als Druckluftdüse ausgebildet, die den Rotationskörper mechanisch mit einem erzeugten Überdruck antreibt. Es wird also vorgeschlagen, dass mit einer Druckluftdüse der Rotationskörper in Rotation versetzt wird, wobei der Antrieb mit der Druckluftdüse unterschiedlich ausgebildet sein kann. Beispielsweise kann mit der Druckluftdüse ein mechanisch mit dem Rotationskörper gekoppeltes Flügelrad angetrieben werden, so dass das Flügelrad ein Drehimpuls auf den Rotationskörper bewirkt.

In einer weiteren Ausführungsform wird zudem vorgeschlagen, dass der erzeugte Überdruck mit einer Drucklufterzeugungseinheit erzeugt wird, zum Beispiel mit einer Druckluftflasche oder einem Kompressor. Dabei ist die Drucklufterzeugungseinheit über eine Druckluftleitung mit dem Rotationserzeugungsmittel verbunden, insbesondere wenn es druckluftbetrieben ausgebildet ist.

In einer bevorzugten weiteren Ausführungsform wird vorgeschlagen, dass der erzeugte Überdruck mit einer Druckluftflasche erzeugt wird.

Zusätzlich oder alternativ wird vorgeschlagen, dass der erzeugte Überdruck mit einer Solardruckerzeugungseinheit erzeugt wird, die einen Überdruck durch Erwärmung bewirkt, wobei eine in einen Innenbereich der Rotationssegmente einströmenden Umgebungsluft erwärmt wird.

Dazu wird in einer besonderen weiteren Ausführungsform vorgeschlagen, dass der Rotationskörper bzw. die Rotationssegmente mit einer lichtdurchlässigen Folie ausgebildet ist, um Licht in einem Innenbereich des Rotationskörper bzw. eines oder mehrere Rotationssegmente einzuleiten, und wobei in dem Innenbereich eine lichtabsorbierender Bereich vorgesehen ist, der das eingeleitet Licht absorbiert und sich erwärmt, und Umgebungsluft von einem Einlass zu einem Auslass entlang des lichtabsorbierenden Bereiches strömt, um den Überdruck durch eine Expansion der Umgebungsluft durch Erwärmung im Innenbereich des Rotationskörpers zu bewirken. Es wird also vorgeschlagen, dass auch solarthermische Effekte zur Druckerzeugung ausgenutzt werden.

Ferner wird in einer weiteren erfindungsgemäßen Ausführungsform ein Rotationskörper gemäß Anspruch 13 vorgeschlagen.

In einer bevorzugten Ausführungsform ist der Rotationskörper nach einer der vorstehenden Ausführungsformen ausgebildet.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:
- Fig. 1: zeigt schematisch eine perspektivische Ansicht einer Energieerzeugungsvorrichtung in einer Ausführungsform in einer vertikalen und horizontalen Ausrichtung,
- Fig. 2: zeigt schematisch eine perspektivische Ansicht einer Energieerzeugungsvorrichtung in einer Ausführungsform in einem ungerefften und gerefften Zustand,
- Fig. 3 A, B: zeigen schematisch zwei Ausführungsformen von Reffmitteln,
- Fig. 4 A, B: zeigen schematisch in einer Seitenansicht und in einer perspektivischen Ansicht eine Energieerzeugungsvorrichtung mit einer Vielzahl von Anlaufelementen,
- Fig. 5 A-C: zeigen schematisch eine Energieerzeugungsvorrichtung in einem Standbetrieb, in einem Wasserbetrieb und in einem Flugbetrieb,
- Fig. 6: zeigt schematisch eine weitere Ausführungsform einer Energieerzeugungsvorrichtung mit einem Rotationserzeugungsmittel.

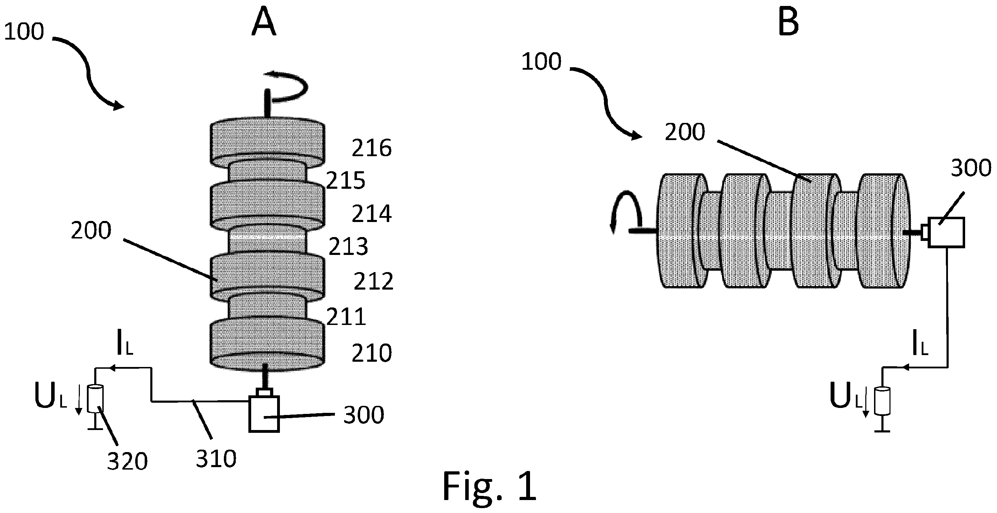

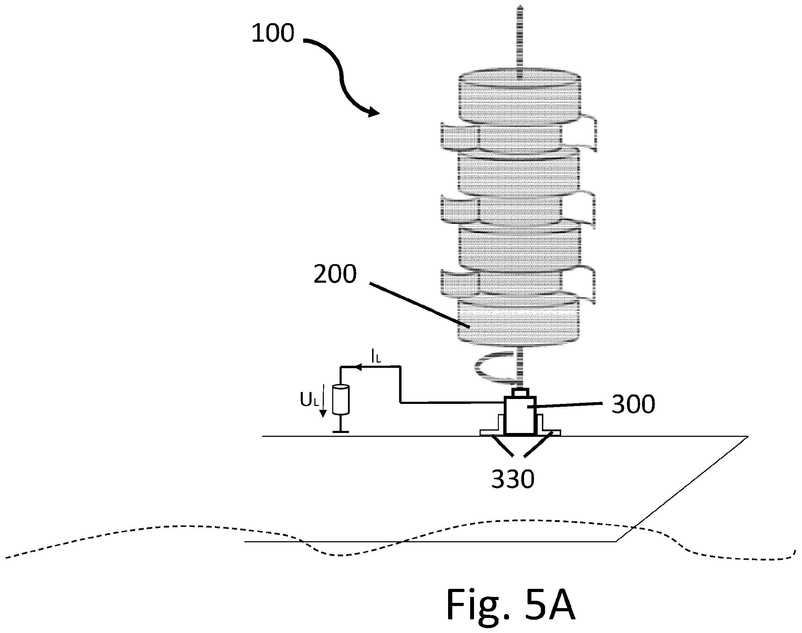

Fig. 1 zeigt eine Energieerzeugungsvorrichtung 100, die beispielsweise in einem Standbetrieb, einem Wasserbetrieb und in einem Flugbetrieb eingestellt werden kann, wie beispielsweise in Fig. 5A bis 5C gezeigt.

Die Energieerzeugungsvorrichtung 100 weist einen Rotationskörper 200 auf, der sich entlang einer Rotationsachse zwischen einem ersten Punkt und einem zweiten Punkt erstreckt. Die Rotationsachse ist dabei mit einem schwarzen Pfeil angedeutet und veranschaulicht zudem die Rotationsrichtung des Rotationskörpers. In der Ansicht A ist die Rotationsachse vertikal ausgerichtet und in der Ansicht B ist die Rotationsachse horizontal ausgerichtet. Demnach wird vorgeschlagen und durch die Figur 1 veranschaulicht, dass die Energieerzeugungsvorrichtung 100 sowohl vertikal als auch horizontal ausgerichtet betrieben werden kann oder in jeder anderweitigen Achslage.

Der Rotationskörper 200 ist zylinderförmig und aus einer Vielzahl von gasgefüllten Rotationssegment ausbildet ist, nämlich aus sieben Rotationssegmenten 210 bis 216. Die Rotationssegmente 210 bis 216 sind miteinander verbunden und entlang der Rotationsachse angeordneten.

Der Rotationskörper 200 ist mit einer Generatorvorrichtung 300 mechanisch verbunden, wobei die Generatorvorrichtung dazu eingerichtet ist, elektrische Energie zu erzeugen, die aus Rotation des Rotationskörpers gewonnen wird. Die Generatorvorrichtung 300 ist als ein Dynamo ausgebildet, an dessen drehbar gelagerten Welle der Rotationskörper 200 befestigt ist. Die im Generator 300 erzeugte elektrische Energie kann über einen elektrischen Leiter 310, in Form einer Spannung U_{L} und Stromes I_{L} entnommen werden und in einen elektrischen Speicher oder Verbraucher 320 eingespeichert werden.

Der Rotationskörper 200 weist ein erstes Rotationssegment 210, ein zweites Rotationssegment 211 und ein drittes Rotationssegment 212 auf. Dabei ist das zweite Rotationssegment 212 zwischen dem ersten und dem dritten Rotationssegment 210 bzw. 212 angeordnet und weist einen kleineren Durchmesser auf als das erste und dritte Rotationssegment 210 bzw. 212.

Diese Anordnung wiederholt sich anschließend bei dem vierten bis siebten Segment 213 bis 216, so dass die jeweils direkt benachbarten Rotationssegmente einen unterschiedlichen Durchmesser aufweisen. So wird aufgrund der unterschiedlichen Durchmesser der Rotationssegmente eine zylinderförmige Baumkuchenform des Rotationskörpers ausgebildet.

Der Rotationskörper 200 ist dabei selbstragend ausgebildet und weist aufblasbare und gasgefüllten Rotationssegmente 210 bis 216 auf, wobei ein Druck im Innenbereich der Rotationssegmente größer ist als ein Umgebungsdruck.

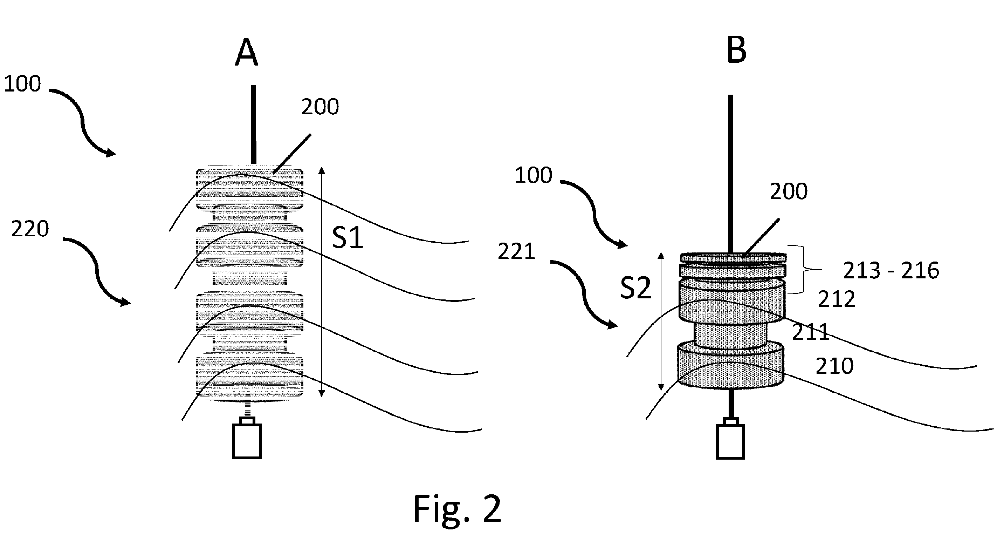

Die Figur 2 zeigt schematisch eine perspektivische Ansicht einer Energieerzeugungsvorrichtung 100, wie beispielsweise in der Figur 1 gezeigt, in einem ungerefften Zustand in der Ansicht A und in einem gerefften Zustand in der Ansicht B. Demnach veranschaulicht die Figur 2 eine Energieerzeugungsvorrichtung 100 in zwei unterschiedlichen Betriebszuständen.

In der linken Ansicht A der Figur 2 sind alle Rotationssegmente 210 bis 216 des Rotationskörpers 200 der Energieerzeugungseinheit 100 vollständig mit einem Gas gefüllt, beispielsweise vollständig mit Luft gefüllt. Die gasgefüllten Rotationssegmente 210 bis 216 in der Ansicht A weisen also in ihrem jeweiligen Innenbreich einen größeren Druck auf als ein Umgebungsdruck.

In der rechten Ansicht B ist der Rotationskörper 200 mit einem Reffmittel gerefft, wobei das Reffmittel in der Figur 2 nicht dargestellt ist. Demnach wurde in der Ansicht B mit einem Reffmittel die Fläche des Rotationskörpers 200 verkleinert, um dem umströmenden Fluid eine geringere Angriffsfläche zu bieten. Die Höhe der Folienelemente 213 bis 216 ist mit dem Reffmittel verändert worden, nämlich verringert worden. Beispielsweise wurde mit einem Ventilsystem, Gas aus den Rotationssegmenten 213 bis 216 abgelassen.

Die gasgefüllten Rotationssegmente bilden einen zumindest teilweise fluidumströmten Bereich 220, 221 aus. Der fluidumströmte Bereich ist also ein Bereich an einer Oberfläche des Rotationskörpers 200 bzw. an der Oberfläche der Rotationssegmente, an dem das Fluid mit der Oberfläche in Kontakt kommt und daran entlangströmt. Das Fluid ist durch die Wellenförmigen Linien in der Figur 2 dargestellt und soll beispielsweise einen Windstrom oder einen Teil davon veranschaulichen.

Durch das Reffen mit einem Reffmittel ist die Länge S1 des Rotationskörpers 200 in der Ansicht A auf die Länge S₂ verändert worden, nämlich verkürzt, wie in der Ansicht B zu erkennen ist. Demnach bildet sich eine unterschiedliche Angriffsfläche für den Fluidstrom im gerefften Zustand aus, wobei die unterschiedlichen Angriffsflächen durch die unterschiedlich langen Doppelpfeile in der Figur 2 veranschaulicht sind, die gleichzeitig die Länge des Rotationskörpers veranschaulichen. Demnach ist mit dem Reffmittel der fluidumströmte Bereich 220 in der Ansicht A zu dem einem geänderten fluidumströmten Bereich 221 verstellt worden.

Dabei sind die Rotationssegmente 210 bis 216 mechanisch miteinander verbunden, beispielsweise ist jedes Rotationssegment 210 bis 216 mechanisch über eine Trennbarriere im Innenbereich der jeweiligen Rotationssegmente mit dem jeweils benachbarten Rotationssegment verbunden, so dass jedes Rotationssegment 210 bis 216 eine geschlossene Luft- bzw. Gaskammer ausbildet, die unabhängig von den jeweils anderen Rotationssegmenten eingeschlossene Gas hält. Das Gas aus den Rotationssegmenten 210 bis 216 kann dazu über wenigstens ein Ventil abgelassen werden, beispielsweise weist jedes Rotationssegment 210 bis 216 ein Ventil auf.

Aufgrund der besonderen Bauchkuchenform, die zuvor beschrieben wurde, wird ein besonders aerodynamisches Reffen bereitgestellt, da sich die Rotationssegmente mit einem größeren Durchmesser auf die Rotationssegmente mit dem kleineren Durchmesser ablegen und somit Faltungen verringert werden, die beispielsweise einer aerodynamischen Form abträglich sind. Wie in der Figur 2 in der Ansicht B dargestellt, legen sich die Rotationssegmente 216 und 214 auf die Rotationssegmente 215 und 213 ab, die einen kleineren Durchmesser aufweisen als die Rotationssegmente 215 und 213.

Ferner sind Rotationssegmente 210 bis 216 aufblasbar ausgebildet, wobei wenigstens ein Rotationssegment ein Ventil zum Einleiten und Ausleiten eines Gases aufweist, beispielsweise zum Einleiten und Ausleiten von Luft, wobei das Ventil nicht dargestellt ist.

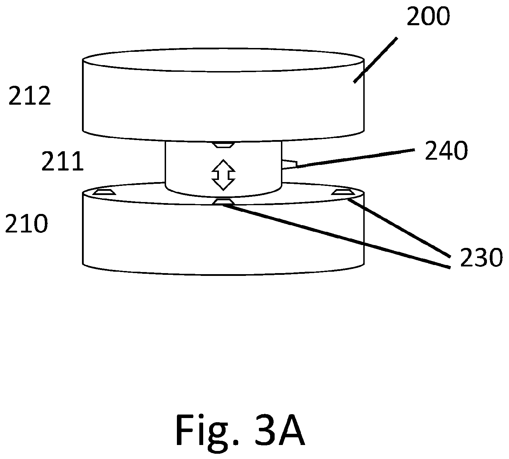

Die Figur 3A zeigt eine Ausführungsform eines Reffmittels. Der Rotationskörper 200 ist aus wenigstens einem ersten, einem zweiten und einem dritten gasgefüllten Rotationssegment 210, 211 und 212 ausbildet, wobei die Rotationssegmente miteinander verbunden sind und entlang der Rotationsachse nebeneinander bzw. übereinander angeordneten sind. Das zweite Rotationssegment 211 ist zwischen dem ersten und dem dritten Rotationssegment 210 bzw. 213 angeordnet und weist einen kleineren Durchmesser auf als das erste und dritte Rotationssegment. Eine Baumkuchen- bzw. Hantelform wird ausgebildet.

Der Rotationskörper 200 weist Reffmittel auf, mit dem ein fluidumströmter Bereich der gasgefüllten Rotationssegmente 210 bis 212 verstellbar ist, nämlich wenigstens ein mechanisches Verbindungmittel 230, das dazu eingerichtet sind, das erste und das dritte Rotationssegment 210 und 212 mechanisch zu verbinden, wobei das mechanische Verbindungmittel 230 aus ineinandergreifenden Druckknöpfen ausgebildet sind. Zudem weist das Rotationssegment 211 ein Ventilsystem 240 auf, das dazu eingerichtet ist, eine Veränderung des fluidumströmten Bereiches mittels Einlassen oder Auslassen eines Gases zu bewirken, also ein weiteres Reffmittel.

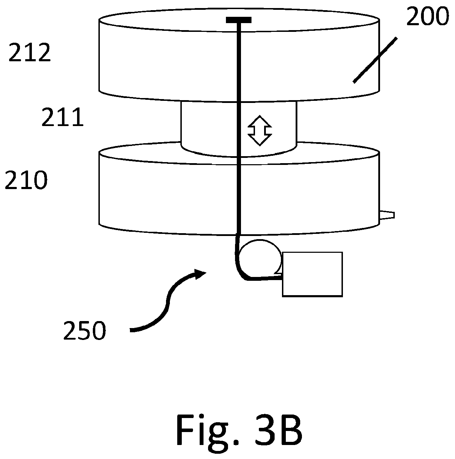

Die Figur 3B zeigt eine Ausführungsform eines weiteren Reffmittels, wobei der Aufbau des Rotationskörper 200 ausgebildet ist, wie zur Figur 3A beschrieben. Als Reffmittel ist ein Zugkraftsystem 250 vorgesehen, das dazu eingerichtet ist, wenigstens eines der gasgefüllten Rotationssegmente entlang der Rotationsachse mittels einer Zugkraft zu komprimieren. In der gezeigten Ausführungsform, ist das Zugkraftsystem 250 als Seilzugsystem ausgebildet und kann mit den zuvor beschriebenen Reffmittel kombiniert werden, wie in der Figur 3A gezeigt. Das Seilzugsystem 250 weist ein Seilelement auf, beispielsweise eine zugstabile Schnur, die an einem ersten Ende über ein Befestigungselement an dem Element 212 befestigt ist. Ein zweites Ende des Seilelementes ist mit einer angetriebenen Seilwinde verbunden, um eine Zugkraft auf das Seilelement auszuüben. Wickelt die Seilwinde das Seilelement auf, resultiert daraus eine Zugkraft, die über das Seilelement auf das Element 212 einwirkt. Demnach ist das Zugkraftsystem 250 dazu eingerichtet, wenigstens eines der gasgefüllten Rotationssegment entlang der Rotationsachse mittels einer Zugkraft zu komprimieren und damit ein Reffen umzusetzen.

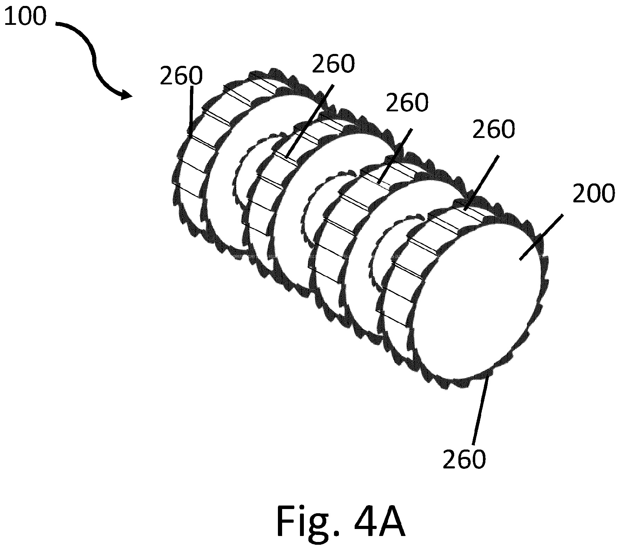

Die Figur 4A zeigt schematisch in einer perspektivischen Ansicht eine Energieerzeugungsvorrichtung 100 mit einem Rotationskörper 200, der eine Vielzahl von Anlaufelementen 260 aufweist. Der Rotationskörper 200 der Energieerzeugungsvorrichtung 100 ist analog ausgebildet, wie zuvor in den Figuren 1 bis 3 beschrieben und gezeigt, nämlich baumkuchenförmig mit sieben Rotationssegmenten.

Im Unterschied zu den zuvor gezeigten Ausführungsformen, auf den Bezug genommen wird, veranschaulicht die Figur 4A, dass der Rotationskörper selbstanlaufend ausgebildet ist. Dazu weist wenigstens eines der Rotationssegmente, nämlich alle Rotationssegmente, wenigstens zwei in Bezug auf die Rotationsache gegenüberliegende Anlaufelemente 260 zur Erhöhung eines Fluidwiderstandes im fluidumströmten Bereich auf. In der Figur 4A sind dabei eine Vielzahl von Anlaufelementen dargestellt, die über einen gesamten Umfang des wenigstens einen Rotationssegments angeordnet sind. Es weisen alle sieben Rotationssegmente eine Vielzahl von Anlaufelementen auf.

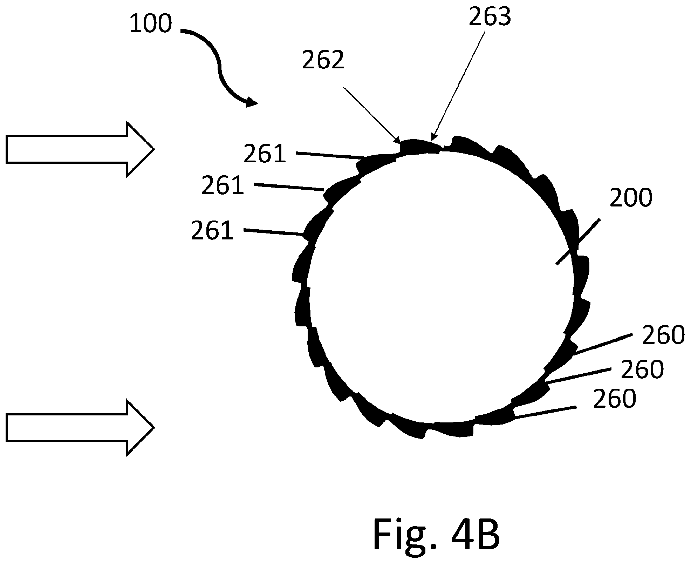

Die Figur 4B zeigt in einer Seitenansicht eine Energieerzeugungsvorrichtung 100 mit einem Rotationskörper 200, der eine Vielzahl von Anlaufelementen 260, 261 aufweist, also beispielsweise die Energieerzeugungsvorrichtung aus der Figur 4A in einer Seitenansicht. Die Anlaufelemente 260, 261 weisen dabei jeweils eine fluidzugewandte Seite 262 und eine fluidabgewandte Seite 263 auf, wobei die fluidzugewandte Seite einen höheren Fluidwiderstand aufweist, als die fluidabgewandte Seite. Damit wird erreicht, dass selbst wenn ein Fluidstrom gleichmäßig und in vollem Umfang auf den Rotationskörper trifft, durch den unterschiedlichen Fluidwiederstand in Kombination mit der rotatorischen Lagerung des Rotationskörpers 200 ein Selbstanlauf der Energieerzeugungsvorrichtung 100 bereitgestellt wird.

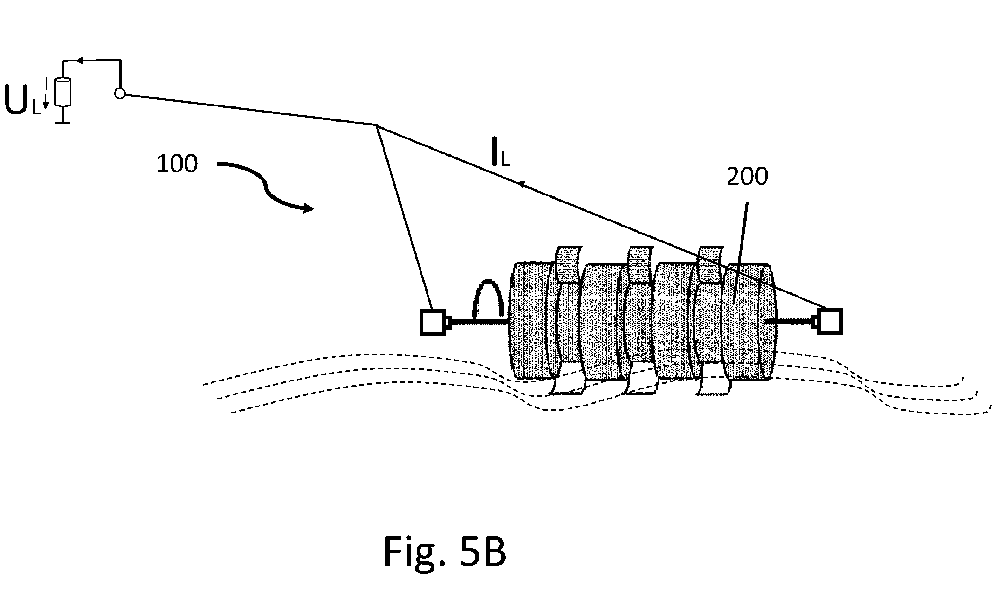

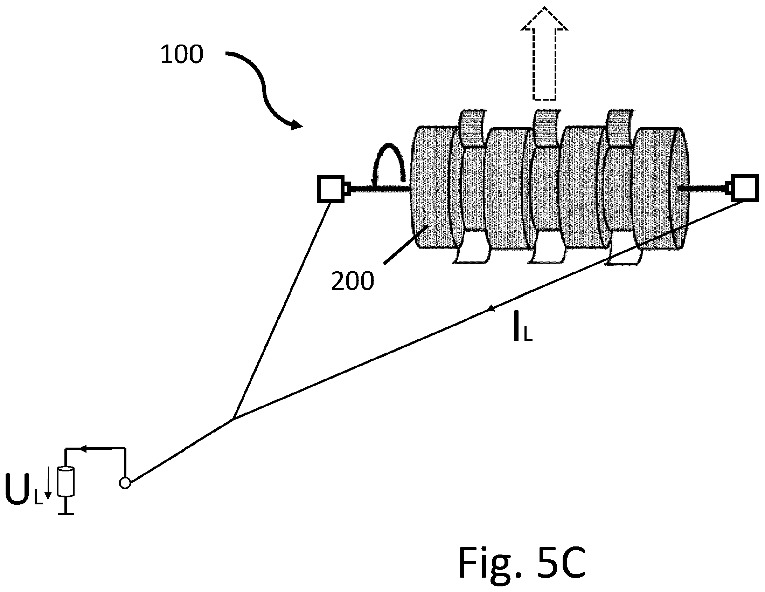

Die Figuren 5A bis 5C zeigen drei unterschiedliche Betriebsarten einer Energieerzeugungsvorrichtung 100, nämlich einen Standbetrieb in der Figur 5A, einen Wasserbetrieb in der Figur 5B und einen Flugbetrieb in der Figur 5C, wie zuvor beschrieben zu den Figuren 1 bis 4 beschrieben.

In der Figur 5A ist die Energieerzeugungsvorrichtung 100 für den Bodenbetrieb eingestellt und weist eine vertikale Rotationsachse auf. Die Generatorvorrichtung 300 weist einen rotierenden Teil und einen feststehenden Teil auf, wobei der rotierende Teil mit dem Rotationskörper 200 mechanisch verbunden ist, nämlich über eine Welle, und der stehende Teil weist ein Befestigungsmittel 330 zur Befestigung an einer Bodenkonstruktion auf.

Als ein geeigneter Einsatzort für den Standbetrieb kann zum Beispiel ein Boot oder Schiff vorgesehen sein, dessen Bug in der Figur 5A schematisch angedeutet ist. Weht nun ein Wind und trifft auf Energieerzeugungsvorrichtung, generiert das System Energie in Form von elektrischer Energie, wie zuvor beschrieben. Die Energieerzeugungsvorrichtung 100 weist dabei für einen Selbstanlauf sechs jeweils paarweise gegenüberliegend angeordnete Anlaufelemente auf, die flügelartig ausgebildet sind, und als Anlaufelemente wie in der Figur 4A und 4B beschrieben arbeiten und ausgebildet sind. Die Energieerzeugungsvorrichtung 100 erzeugt entsprechend, neben einer elektrischen Energie, aufgrund des Magnus-Effektes auch eine Vortriebskraft.

In der Figur 5B ist die Energieerzeugungsvorrichtung 100 für den Wasserbetrieb eingestellt und weist eine horizontale Rotationsachse auf. Die Generatorvorrichtung 300 ist über ein Seilsystem mit einem Fixierpunkt verbunden, um die Energieerzeugungsvorrichtung 100 an einem festen Punkt zu fixieren, beispielsweise an einem Boot oder Schiff. Zudem ist die Generatorvorrichtung 300 mit zwei gekapselten Generatoren ausgebildet und damit wasserfest. Strömt Wasser entlang des fluidumströmten Bereiches, beginnt die Energieerzeugungsvorrichtung 100 Energie aus einem Wasserstrom zu erzeugen. Dieser Effekt wird durch die flügelförmigen Anlaufelemente begünstigt. Demnach ist die Energieerzeugungsvorrichtung 100 auch für den Wasserbetrieb vorgesehen und kann elektrische Energie aus einem Fluss- oder einem Meeresstrom gewinnen. Es versteht sich, dass aufgrund der gasgefüllten Rotationssegmente der Rotationskörper genügend Auftrieb für einen Wasserbetrieb aufweist, sprich nicht untergeht.

In der Figur 5C ist die Energieerzeugungsvorrichtung 100 für den Flugbetrieb eingestellt und weist eine vertikale Rotationsachse auf. Dazu sind die Rotationssegmente des Rotationskörpers 200 aus einer widerstandsfähigen Leichtbaufolie ausgebildet, und die Komponenten des Rotationskörpers derart ausgebildet, dass ein Flugbetrieb mit dem Rotationskörper einstellbar ist. In dem Flugbetrieb kann vorgesehen sein, wenigstens eines der Rotationssegmente mit einem Gas zu füllen, dessen Dichte kleiner ist als Luft, beispielsweise mit Helium, um eine ausreichend große Auftriebskraft zu erzeugen, die die entgegenwirkende Gewichtskraft übersteigt. Ein mechanisch mit dem Rotationskörper verbundene Generatorvorrichtung, die zwei Generatoren 300 aufweist, erzeugt elektrische Energie, die über die elektrischen Leiter abgeleitet wird. Die Generatorvorrichtung weist also einen rotierenden Teil und einen feststehenden Teil auf, wobei der rotierende Teil mit dem Rotationskörper mechanisch verbunden ist, nämlich unmittelbar, und der stehende Teil weist Befestigungsmittel zur Befestigung an einem Seilsystem auf. Die Generatorvorrichtung ist dazu eingerichtet ist, elektrische Energie zu erzeugen, die direkt aus der Rotation des Rotationskörpers gewonnen wird.

An die Befestigungsmittel wird vorzugsweise ein reissfestes Halteseil befestigt werden, das bevorzugt einen elektrischen Leiter umfasst oder ein elektrischer Leiter ist, um die erzeugte Energie abzuführen.

In einer zusätzlichen oder alternativen Ausführungsform, die nicht in der Figur 5C dargestellt ist, ist die Generatorvorrichtung 300 mechanisch über ein Zugseilsystem mit dem Rotationskörper 200 verbunden, um elektrische Energie aus einer durch die Rotation des Rotationskörpers entstehende Auftriebskraft und/oder Vortriebskraft zu gewinnen.

Es wird also vorgeschlagen, Energie zusätzlich oder alternativ mit einem Generator zu gewinnen, der über ein Zugseilsystem mit einem oder mehreren reissfesten Seilen mit dem Rotationskörper 200 verbunden ist, also nicht unmittelbar an dem Rotationskörper 200 angeordnet ist, beispielsweise an einer Bodenstation. In anderen Worten wird vorgeschlagen, dass der Rotationskörper 200 als Zugdrachen eingesetzt wird, also während der Rotationskörper 200 aufgrund einer Auftriebskraft aufsteigt, ein Generator über eine Seilwinde angetrieben wird. Ist die volle Seillänge erreicht, wird der Rotationskörper gerefft, sodass er absinkt und das Seil wieder eingeholt werden kann, um den Vorgang zur Energiegewinnung anschließend erneut auslösen zu können. Die Auftriebskraft des Rotationskörper 200 ist dabei auf die Rotation des Rotationskörper 200 zurückzuführen, die durch den Magnus-Effekt hervorgerufen wird, dessen Prinzip grundsätzlich von Flettner-Rotoren bekannt ist. Die beschriebene Generatorvorrichtung ist demnach dazu eingerichtet, elektrische Energie zu erzeugen, die indirekt aus der Rotation des Rotationskörpers gewonnen wird. Diese Generatorvorrichtung kann auch über ein Zugseilsystem auf dem Wasser Einsatz zur Energieumwandlung in photo-elektrische oder thermische Energie finden.

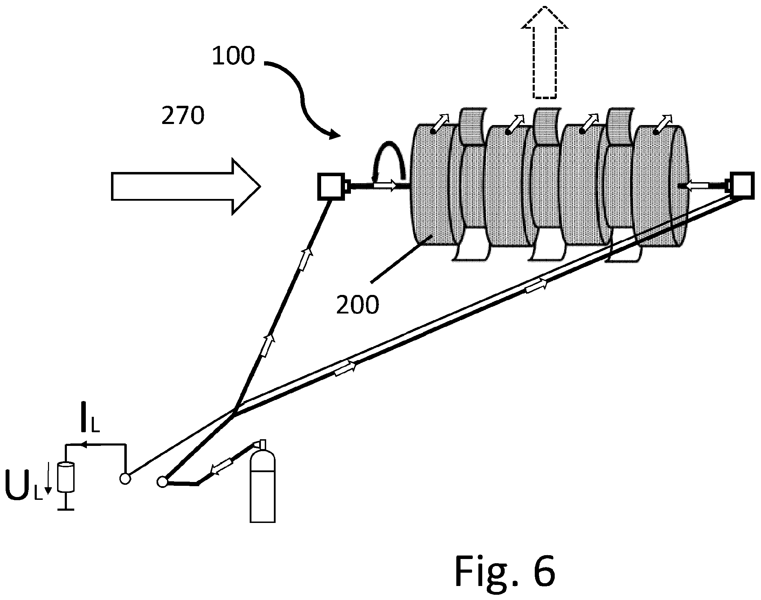

In der Figur 6 ist die Energieerzeugungsvorrichtung 100 im Flugbetrieb eingestellt und weist eine vertikale Rotationsachse auf. Im Unterschied zu der Figur 5C, auf die Bezug genommen wird, weißt der Rotationskörper 200 ein Rotationserzeugungsmittel auf, um den Rotationskörper 200 in eine vorbestimmte Rotation zu versetzen oder zu halten, wobei das Rotationserzeugungsmittel dazu eingerichtet ist, einen rotatorischen Drehimpuls des Rotationskörpers zu bewirken. Als Rotationserzeugungsmittel sind in der Figur 5C dabei gerichtete Foliendüse durch kleine schwarze Punkte mit einem austretenden Pfeil veranschaulicht, die einen erzeugten Überdruck aus einem Innenbereich eines Rotationssegmentes auslassen. Der notwendige Überdruck kann beispielsweise von einer Drucklufterzeugungseinheit stammen, die als Druckluftflasche in der Figur 6 dargestellt ist. Der Weg der Druckluft ist durch die kleinen weißen Pfeile dargestellt.

Zusätzlich kann eine Druckluftdüse vorgesehen sein, die den Rotationskörpers 200 direkt über ein Flügelrad antreibt, das in der Figur 6 nicht dargestellt ist. Ebenfalls nicht dargestellt sind Stabilitäts- und Fluidnachführungsvorrichtungen

Zusammengefasst wird also eine Energieerzeugungsvorrichtung vorgeschlagen, die verschiedene physikalische Effekte ausnutzt, nämlich den Magnus-, Darrieus- sowie den Savonius-Effekt, die allgemein bekannt sind.

Die vorgeschlagene Energieerzeugungsvorrichtung weist eine Reihe von Vorteilen auf, die nachfolgend stichpunktartig gesammelt sind:
- Es wird eine multifunktionale Windanlage und/oder Wasserkraftanlage zur Energieerzeugung von Strom, Licht, Wärme o. ä, bereitgestellt, die auch als Vortriebsanlage für Fortbewegungsmittel wie Schiffe oder andere Fahrzeuge geeignet ist.
- Durch Möglichkeit die Größe und Form der Energieerzeugungsvorrichtung verändern zu können und die Energieerzeugungsvorrichtung horizontal oder vertikal oder in anderer Raumlage anordnen zu können, wird eine vielseitige Einsatzmöglichkeit bereitgestellt. Zudem sind die Vorteile in einem eigenständigen auf- und abbaubaren Prinzip und einem damit verbundenen einfachen Transport offensichtlich.
- Zudem lässt sich die Kentergefahr bei Booten oder Schiffen reduzieren, wenn eine Energieerzeugungsvorrichtung wie vorgeschlagen bei Auffrischen des Windes eingesetzt wird.

## Patentansprüche

1. Energieerzeugungsvorrichtung (100) zur Erzeugung von Energie aus einem strömenden Fluid, insbesondere aus einem Windstrom und/oder aus einem Wasserstrom, umfassend:
- einen Rotationskörper (200), wobei
- sich der Rotationskörper entlang einer Rotationsachse zwischen einem ersten Punkt und einem zweiten Punkt erstreckt und
- der Rotationskörper (200) zur Rotation um die Rotationsachse eingerichtet ist und
- der Rotationskörper (200) aus wenigstens einem ersten, einem zweiten und einem dritten Rotationssegment (210, 211, 212) ausgebildet ist, wobei
- die Rotationssegmente (210, 211, 212) miteinander verbunden sind und
- entlang der Rotationsachse angeordnet sind, und
- einen zumindest teilweise fluidumströmten Bereich ausbilden, wobei
- das zweite Rotationssegment (211) zwischen dem ersten (210) und dem dritten Rotationssegment (212) angeordnet ist und einen differenten Durchmesser zum ersten und dritten Rotationssegment aufweist; und
- eine mechanisch mit dem Rotationskörper verbundene Generatorvorrichtung (300), wobei die Generatorvorrichtung dazu eingerichtet ist, Energie zu erzeugen, die aus Rotation des Rotationskörpers gewonnen wird, wobei die Generatorvorrichtung (300) mechanisch über ein Zugseilsystem mit dem Rotationskörper verbunden ist, um elektrische Energie aus einer durch die Rotation des Rotationskörpers entstehende Auftriebskraft und/oder Vortriebskraft zu gewinnen,
**dadurch gekennzeichnet, dass** der Rotationskörper (200) ein Rotationserzeugungsmittel aufweist, um den Rotationskörper in eine vorbestimmte Rotation zu versetzen bzw. zu halten, wobei das Rotationserzeugungsmittel dazu eingerichtet ist, einen rotatorischen Drehimpuls des Rotationskörpers zu bewirken, und das Rotationserzeugungsmittel
- als eine gerichtete Segmentdüse ausgebildet ist, die einen erzeugten Überdruck aus einem Innenbereich eines Rotationssegmentes auslässt und/oder
- als Druckluftdüse oder Warmluftdüse ausgebildet ist, die den Rotationskörper mechanisch mit einem erzeugten Überdruck antreibt.

2. Energieerzeugungsvorrichtung nach Anspruch 1, **dadurch gekennzeichnet, dass**
- das erste Rotationssegment (210) einen ersten Durchmesser aufweist,
- das zweite Rotationssegment (211) einen zweiten Durchmesser aufweist und
- das dritte Rotationssegment (212) einen dritten Durchmesser aufweist, wobei
der erste Durchmesser größer ist als der zweite Durchmesser und der dritte Durchmesser dem ersten Durchmesser entspricht, insbesondere um eine zylinderförmige Baumkuchenform des Rotationskörpers (200) auszubilden, und/oder
der erste Durchmesser kleiner ist als der zweite Durchmesser und der dritte Durchmesser dem ersten Durchmesser entspricht, insbesondere um eine elliptische Form oder flache Diamantenform des Rotationskörpers (200) auszubilden, und/oder
der erste Durchmesser größer ist als der zweite Durchmesser und der zweite Durchmesser größer ist als der dritte Durchmesser, insbesondere um eine Kegelform des Rotationskörpers (200) auszubilden und/oder
die Rotationssegmente (210, 211, 212) ringförmig ausgebildet sind, insbesondere um den Rotationskörper hohl auszubilden und eine offene Tonnenform auszubilden, wobei die ringförmigen Rotationssegmente zur Rotation über eine Tragkonstruktion rotatorisch um die Rotationsachse gelagert ist.

3. Energieerzeugungsvorrichtung nach Anspruch 1 oder 2, **dadurch gekennzeichnet, dass**
- der Rotationskörper (200) selbstanlaufend ausgebildet ist, und
- dazu vorzugsweise wenigstens ein Rotationssegment (210; 211; 212) wenigstens zwei in Bezug auf die Rotationsachse gegenüberliegende Anlaufelemente (260, 261) zur Erhöhung eines Fluidwiderstandes im fluidumströmten Bereich aufweist, insbesondere eine Vielzahl von Anlaufelementen aufweist, die über einen gesamten Umfang des wenigstens einen Rotationssegmentes angeordnet sind, und weiter vorzugsweise
- die Anlaufelemente (260, 261) eine fluidzugewandte Seite (262) und eine fluidabgewandte Seite (263) aufweisen, wobei die fluidzugewandte Seite einen höheren Fluidwiderstand aufweist als die fluidabgewandte Seite.

4. Energieerzeugungsvorrichtung nach einem der vorstehenden Ansprüche, **dadurch gekennzeichnet, dass**
- der Rotationskörper reffbar ausgebildet ist, und
- dazu vorzugsweise wenigstens eins der Rotationssegmente gasgefüllt ausgebildet ist und insbesondere in einem Innenbereich des wenigstens einen gasgefüllten Rotationselementes in einem ungerefften Zustand ein größerer Druck vorliegt als ein Umgebungsdruck und ein Reffen durch einen Gasaustausch bewirkt wird, und/oder
- dazu vorzugsweise wenigstens eins der Rotationssegmente (210, 211, 212) mit einem Memoryschaum gefüllt ausgebildet sind, der insbesondere in einem ungerefften Zustand unkomprimiert und in den unkomprimierten Zustand strebt, wenn eine Krafteinwirkung auf den Memoryschaum ausgeübt wird, insbesondere durch ein Reffmittel, und/oder
- dazu vorzugsweise wenigstens eins der Rotationssegmente (210, 211, 212) mit einer faltbaren und elastischen Gitterstruktur ausgebildet sind, die insbesondere in einem ungerefften Zustand unkomprimiert ist und in den unkomprimierten Zustand strebt, wenn eine Krafteinwirkung auf die Gitterstruktur ausgeübt wird, insbesondere durch ein Reffmittel.

5. Energieerzeugungsvorrichtung nach einem der vorstehenden Ansprüche, **dadurch gekennzeichnet, dass**
- ein Reffmittel (230, 240, 250) am Rotationskörper angeordnet ist, mit dem der fluidumströmte Bereich der Rotationssegmente (210, 211, 212) verstellbar ist.

6. Energieerzeugungsvorrichtung nach Anspruch 5, **dadurch gekennzeichnet, dass** das Reffmittel ein Reffmittel ist aus der Liste von Reffmitteln aufweisend:
- ein mechanisches Verbindungmittel (230), das dazu eingerichtet sind, Rotationssegmente mechanisch zu verbinden;
- ein Ventilsystem (240), das dazu eingerichtet ist, eine Veränderung des fluidumströmten Bereiches mittels Einlassen oder Auslassen eines Gases zu bewirken;
- ein Zugkraftsystem (250), das dazu eingerichtet ist, wenigstens eines der Rotationssegmente entlang der Rotationsachse mittels einer Zugkraft zu komprimieren, insbesondere ein Seilzugsystem oder ein Stangensystem.

7. Energieerzeugungsvorrichtung nach einem der vorstehenden Ansprüche, **dadurch gekennzeichnet, dass**
- wenigstens eines der Rotationssegmente (210, 211, 212) gasdicht ausgebildet ist und mit einem Gas gefüllt ist dessen Dichte kleiner ist als Luft, vorzugsweise mit Helium, insbesondere um eine Auftriebskraft des Rotationskörpers zu erzeugen und einen Flugbetrieb einzustellen.

8. Energieerzeugungsvorrichtung nach einem der vorstehenden Ansprüche, **dadurch gekennzeichnet, dass**
- die Rotationssegmente (210, 211, 212) aufblasbar ausgebildet sind und vorzugsweise dazu wenigstens ein Rotationssegment, insbesondere alle Rotationssegmente, ein Ventil zum Einleiten und Ausleiten eines Gases aufweist, insbesondere zum Einleiten und Ausleiten von Luft oder Helium.

9. Energieerzeugungsvorrichtung nach einem der vorstehenden Ansprüche, **dadurch gekennzeichnet, dass**
- dass die Komponenten des Rotationskörpers (200) derart ausgebildet sind, dass ein Flugbetrieb und ein Wasserbetrieb mit dem Rotationskörper einstellbar ist, wobei dazu
die Rotationssegmente (210, 211, 212) des Rotationskörpers (200) aus widerstandsfähigem Leichtbaumaterial ausgebildet sind, vorzugsweise aus einer widerstandsfähigen Folie, und/oder
die Generatorvorrichtung (300) gekapselt ausgebildet ist.

10. Energieerzeugungsvorrichtung nach einem der vorstehenden Ansprüche, **dadurch gekennzeichnet, dass**
- die Energieerzeugungsvorrichtung zudem eine Fluidnachführungsvorrichtung aufweist, die dazu eingerichtet ist, den Rotationskörper (200) einem veränderlichen Fluidstrom nachzuführen, insbesondere eine Windnachführungsvorrichtung, und/oder
- die Energieerzeugungsvorrichtung eine Stabilisationsvorrichtung aufweist, die dazu eingerichtet ist, den Rotationskörper (200) bewegungsstabil in dem Fluidstrom zu halten.

11. Energieerzeugungsvorrichtung nach einem der vorstehenden Ansprüche, **dadurch gekennzeichnet, dass**
- die Generatorvorrichtung (300) einen rotierenden Teil und einen feststehenden Teil aufweist, wobei der rotierende Teil mit dem Rotationskörper mechanisch verbunden ist und der stehende Teil Befestigungsmittel zur Befestigung an einer Bodenkonstruktion oder an einem Seilsystem aufweist, und/oder
- die Generatorvorrichtung (300) permanenterregt ausgebildet ist und dazu eingerichtet ist, einen erzeugten Strom an einem elektrischen Anschluss abzugeben, und der Generator vorzugsweise als Außenläufer ausgebildet ist.

12. Energieerzeugungsvorrichtung nach einem der vorhergehenden Ansprüche, **dadurch gekennzeichnet, dass**
- der erzeugte Überdruck mit einer Drucklufterzeugungseinheit oder einer Wärme erzeugenden Einheit erzeugt wird, insbesondere mit einem Kompressor oder mit einer Druckluftflasche, wobei die Wärme- oder Drucklufterzeugungseinheit integriert in den Rotationskörper ausgebildet ist oder über eine Druckluftleitung mit dem Rotationserzeugungsmittel verbunden ist,
und/oder
- der erzeugte Überdruck mit einer Solardruckerzeugungseinheit erzeugt wird, die einen Überdruck durch Erwärmung bewirkt, wobei eine in einen Innenbereich der Rotationssegmente einströmenden Umgebungsluft erwärmt wird, und insbesondere dazu
- der Rotationskörper bzw. die Rotationssegmente mit einer lichtdurchlässigen Folie ausgebildet ist, um Licht in einem Innenbereich des Rotationskörper bzw. eines oder mehrere Rotationssegmente einzuleiten, und wobei in dem Innenbereich eine lichtabsorbierender Bereich vorgesehen ist, der das eingeleitet Licht absorbiert und sich erwärmt, und Umgebungsluft von einem Einlass zu einem Auslass entlang des lichtabsorbierenden Bereiches strömt, um den Überdruck durch eine Expansion der Umgebungsluft durch Erwärmung im Innenbereich des Rotationskörpers zu bewirken.

13. Rotationskörper (200) für eine Energieerzeugungsvorrichtung zur Erzeugung von Energie aus einem strömenden Fluid, insbesondere aus einem Windstrom und/oder aus einem Wasserstrom, wobei sich der Rotationskörper (200) entlang einer Rotationsachse zwischen einem ersten Punkt und einem zweiten Punkt erstreckt und der Rotationskörper zur Rotation um die Rotationsachse eingerichtet ist und der Rotationskörper aus wenigstens einem ersten, einem zweiten und einem dritten Rotationssegment (210, 211, 212) ausgebildet ist, wobei die Rotationssegmente miteinander verbunden sind und entlang der Rotationsachse angeordnet sind, und einen zumindest teilweise fluidumströmten Bereich ausbilden, wobei das zweite Rotationssegment (211) zwischen dem ersten und dem dritten Rotationssegment (210, 212) angeordnet ist und einen differenten Durchmesser zum ersten und dritten Rotationssegment (210, 212) aufweist, insbesondere um eine zylinderförmige Baumkuchenform oder eine Kugelform oder eine Kegelform des Rotationskörpers auszubilden, wobei der Rotationskörper mechanisch mit einer Generatorvorrichtung (300) verbindbar ist, die dazu eingerichtet ist, Energie zu erzeugen, die aus Rotation des Rotationskörpers gewonnen wird, wobei der Rotationskörper mechanisch über ein Zugseilsystem mit der Generatorvorrichtung (300) verbindbar ist, um elektrische Energie aus einer durch die Rotation des Rotationskörpers entstehende Auftriebskraft und/oder Vortriebskraft zu gewinnen, **dadurch gekennzeichnet, dass** der Rotationskörper (200) ein Rotationserzeugungsmittel aufweist, um den Rotationskörper in eine vorbestimmte Rotation zu versetzen bzw. zu halten, wobei das Rotationserzeugungsmittel dazu eingerichtet ist, einen rotatorischen Drehimpuls des Rotationskörpers zu bewirken, und das Rotationserzeugungsmittel
- als eine gerichtete Segmentdüse ausgebildet ist, die einen erzeugten Überdruck aus einem Innenbereich eines Rotationssegmentes auslässt und/oder
- als Druckluftdüse oder Warmluftdüse ausgebildet ist, die den Rotationskörper mechanisch mit einem erzeugten Überdruck antreibt.

14. Rotationskörper nach Anspruch 13, **dadurch gekennzeichnet, dass** er wie der Rotationskörper der Energieerzeugungsvorrichtung nach einem der vorstehenden Ansprüche 1 bis 12 ausgebildet ist.

## Claims

1. An energy generating device (100) for generating energy from a flowing fluid, especially from a wind flow and/or from a water flow, comprising:
- a rotation body (200), wherein
- the rotation body extends along an axis of rotation between a first point and a second point and
- the rotation body (200) is adapted to rotate about the axis of rotation and
- the rotation body (200) is formed from at least a first, a second, and a third rotation segment (210, 211, 212), wherein
- the rotation segments (210, 211, 212) are joined together and
- arranged along the axis of rotation, and
- they form a region at least partly surrounded by fluid, wherein
- the second rotation segment (211) is situated between the first (210) and the third rotation segment (212) and has a different diameter than the first and third rotation segment; and
- a generator device (300) mechanically connected to the rotation body, wherein the generator device is adapted to generate energy which is produceed from the rotation of the rotation body, wherein the generator device (300) is mechanically connected by a traction cable system to the rotation body in order to produce electric energy from a lifting force and/or propulsive force produced by the rotation of the rotation body,
**characterized in that** the rotation body (200) comprises a rotation generating means for placing and keeping the rotation body in a predetermined rotation, wherein the rotation generating means is adapted to bring about a rotational angular momentum of the rotation body, and the rotation generating means is designed
- as a directional segment nozzle, which releases a generated excess pressure from an internal region of a rotation segment and/or
- as a compressed air nozzle or hot air nozzle, which drives the rotation body mechanically with a generated excess pressure.

2. The energy generating device according to claim 1, **characterized in that**
- the first rotation segment (210) has a first diameter,
- the second rotation segment (211) has a second diameter and
- the third rotation segment (212) has a third diameter, wherein
the first diameter is larger than the second diameter and the third diameter corresponds to the first diameter, especially so as to form a cylinder-shaped tree cake form of the rotation body (200), and/or
the first diameter is smaller than the second diameter and the third diameter corresponds to the first diameter, especially so as to form an elliptical shape or flat diamond shape of the rotation body (200), and/or
the first diameter is larger than the second diameter and the second diameter is larger than the third diameter, especially so as to form a conical shape of the rotation body (200) and/or the rotation segments (210, 211, 212) are shaped as rings, especially so that the rotation body is hollow and there is formed an open barrel shape, wherein the ring-shaped rotation segments are mounted rotatably about the axis of rotation by a supporting structure.

3. The energy generating device according to claim 1 or 2, **characterized in that**
- the rotation body (200) is formed as self-starting, and
- for this purpose, preferably at least one rotation segment (210; 211; 212) comprises at least two starting elements (260, 261) situated opposite in relation to the axis of rotation for increasing the fluid resistance in the region surrounded by fluid, in particular, it comprises a plurality of starting elements arranged over the entire circumference of the at least one rotation segment, and further preferably
- the starting elements (260, 261) have one side facing the fluid (262) and one side facing away from the fluid (263), the side facing the fluid having a larger fluid resistance than the side facing away from the fluid.

4. The energy generating device according to one of the preceding claims, **characterized in that**
- the rotation body is designed to be reefable, and
- preferably at least one of the rotation segments is gas-filled and in particular a higher pressure is present especially in an inner region of the at least one gas-filled rotation element in an unreefed state than the ambient pressure and a reefing is accomplished by gas exchange, and/or
- preferably at least one of the rotation segments (210, 211, 212) is filled with a memory foam, which is uncompressed especially in an unreefed state and strives for the uncompressed state when a force is applied to the memory foam, especially by a reefing means, and/or
- preferably at least one of the rotation segments (210, 211, 212) is formed with a foldable and elastic lattice structure, which is uncompressed especially in an unreefed state and strives for the uncompressed state when a force is applied to the lattice structure, especially by a reefing means.

5. The energy generating device according to one of the preceding claims, **characterized in that**
- a reefing means (230, 240, 250) is arranged on the rotation body, with which the region surrounded by fluid of the rotation segments (210, 211, 212) can be adjusted.

6. The energy generating device according to claim 5, **characterized in that** the reefing means is a reefing means from the list of reefing means comprising:
- a mechanical connecting means (230), which is adapted to mechanically connect rotation segments;
- a valve system (240), which is adapted to produce a change in the region surrounded by fluid by means of admitting or venting a gas;
- a traction system (250 which is adapted to compress at least one of the rotation segments along the axis of rotation by means of a traction force, in partricular a cable pull system or a rod system.

7. The energy generating device according to one of the preceding claims, **characterized in that**
- at least one of the rotation segments (210, 211, 212) is gas-tight and filled with a gas the density of which is less than that of air, preferably helium, in particular in order to generate a lifting force of the rotation body and establish a flying operation.

8. The energy generating device according to one of the preceding claims, **characterized in that**
- the rotation segments (210, 211, 212) are inflatable and preferably for this purpose at least one rotation segment, especially all rotation segments, has a valve for admitting and discharging a gas, especially for admitting and discharging air or helium.

9. The energy generating device according to one of the preceding claims, **characterized in that**
- the components of the rotation body (200) are designed such that a flying operation and a water operation can be established with the rotation body, for which purpose the rotation segments (210, 211, 212) of the rotation body (200) are made of durable lightweight material, preferably a durable film, and/or
the generator device (300) is encapsulated.

10. The energy generating device according to one of the preceding claims, **characterized in that**
- the energy generating device further compriss a fluid tracking device, which is adapted to make the rotation body (200) track a variable fluid flow, in particular a wind tracking device, and/or
- the energy generating device comprises a stabilization device, which is adapted to maintain the rotation body (200) stable in motion in the fluid flow.

11. The energy generating device according to one of the preceding claims, **characterized in that**
- the generator device (300) comprises a rotating part and a stationary part, wherein the rotating part is mechanically connected to the rotation body and the stationary part comprises fastening means for securing to a floor structure or to a cable system, and/or
- the generator device (300) is permanently excited in design and is adapted to put out a generated current to an electrical terminal, and the generator is preferably designed as an external rotor.

12. The energy generating device according to one of the preceding claims, **characterized in that**
- the generated excess pressure is generated with a compressed air generating unit or a heat generating unit, in particular with a compressor or with a compressed air cylinder, wherein the heat or compressed air generating unit is integrated in the rotation body or connected to the rotation generating means by a compressed air line,
and/or
- the generated excess pressure is generated with a solar pressure generating unit, which produces an excess pressure by heating, wherein ambient air flowing into an internal region of the rotation segments is heated, and in particular for this purpose
- the rotation body or the rotation segments are formed with a transparent film, in order to introduce light in an internal region of the rotation body or of one or more rotation segments, and wherein a light-absorbing region is provided in the internal region, which absorbs the light so introduced and becomes heated, and ambient air flows from an inlet to an outlet along the light-absorbing region in order to produce the excess pressure by an expansion of the ambient air due to heating in the internal region of the rotation body.

13. A rotation body (200) for an energy generating device for generating energy from a flowing fluid, especially from a wind flow and/or from a water flow, wherein the rotation body (200) extends along an axis of rotation between a first point and a second point and the rotation body is adapted to rotate about the axis of rotation and the rotation body is formed from at least a first, a second, and a third rotation segment (210, 211, 212), wherein the rotation segments are joined together and arranged along the axis of rotation, and they form a region at least partly surrounded by fluid, wherein the second rotation segment (211) is situated between the first and the third rotation segment (210, 212) and has a different diameter than the first and third rotation segment (210, 212), in particular in order to form a cylinder-shaped tree cake form or a spherical shape or a conical shape of the rotation body, wherein the rotation body is mechanically connected to a generator device (300) in order to produce electric energy from the rotation of the rotation body, wherein the rotation body is mechanically connected by a traction cable system to the generator device (300) in order to produce electric energy from a lifting force and/or propulsive force produced by the rotation of the rotation body, **characterized in that** the rotation body (200) comprises a rotation generating means for placing and keeping the rotation body in a predetermined rotation, wherein the rotation generating means is adapted to bring about a rotational angular momentum of the rotation body and the rotation generating means is designed
- as a directional segment nozzle, which releases a generated excess pressure from an internal region of a rotation segment and/or
- as a compressed air nozzle or hot air nozzle, which drives the rotation body mechanically with a generated excess pressure.

14. The rotation body according to claim 13, **characterized in that** it is configured like the rotation body of the energy generating device according to one of the preceding claims 1 to 12.

## Revendications

1. Dispositif de production d'énergie (100) pour produire de l'énergie à partir d'un fluide en circulation, notamment à partir d'un courant de vent et/ou à partir d'un courant d'eau, comprenant :
- un corps rotatif (200), dans lequel
- le corps rotatif s'étend le long d'un axe de rotation entre un premier point et un deuxième point et
- le corps rotatif (200) est configuré pour tourner autour de l'axe de rotation et
- le corps rotatif (200) est réalisé à partir d'au moins un premier, un deuxième et un troisième segment de rotation (210, 211, 212), dans lequel
- les segments de rotation (210, 211, 212) sont reliés entre eux et
- sont disposés le long de l'axe de rotation, et
- réalisent une zone au moins partiellement entourée de fluide, dans lequel
- le deuxième segment de rotation (211) est disposé entre le premier (210) et le troisième segment de rotation (212) et présente un diamètre différent du premier et du troisième segment de rotation ; et
- un dispositif générateur (300) relié mécaniquement au corps rotatif, dans lequel le dispositif générateur est configuré pour produire de l'énergie qui est obtenue à partir de la rotation du corps rotatif, dans lequel le dispositif générateur (300) est relié mécaniquement au corps rotatif par l'intermédiaire d'un système de câble de traction pour obtenir de l'énergie électrique à partir d'une force de poussée et/ou force propulsive résultant de la rotation du corps rotatif,
**caractérisé en ce que** le corps rotatif (200) présente un moyen de production de rotation pour amener ou maintenir le corps rotatif dans une rotation prédéterminée, dans lequel le moyen de production de rotation est configuré pour provoquer une impulsion de rotation rotative du corps rotatif, et le moyen de production de rotation
- est réalisé en tant que buse segmentée dirigée qui fait sortir une surpression produite d'une zone intérieure d'un segment de rotation et/ou
- est réalisé en tant que buse à air comprimé ou buse à air chaud qui entraîne mécaniquement le corps rotatif avec une surpression produite.

2. Dispositif de production d'énergie selon la revendication 1, **caractérisé en ce que**
- le premier segment de rotation (210) présente un premier diamètre,
- le deuxième segment de rotation (211) présente un deuxième diamètre et
- le troisième segment de rotation (212) présente un troisième diamètre, dans lequel
le premier diamètre est supérieur au deuxième diamètre et le troisième diamètre correspond au premier diamètre, notamment pour réaliser une forme de gâteau cylindrique avec des couches concentriques du corps rotatif (200), et/ou
le premier diamètre est inférieur au deuxième diamètre et le troisième diamètre correspond au premier diamètre, notamment pour réaliser une forme elliptique ou forme de diamant plat du corps rotatif (200), et/ou
le premier diamètre est supérieur au deuxième diamètre et le deuxième diamètre est supérieur au troisième diamètre, notamment pour réaliser une forme conique du corps rotatif (200) et/ou
les segments de rotation (210, 211, 212) sont réalisés de manière annulaire, notamment pour réaliser le corps rotatif de manière creuse et pour réaliser une forme de baril ouvert, dans lequel les segments de rotation annulaires pour la rotation sont montés en rotation autour de l'axe de rotation par l'intermédiaire d'une structure porteuse.

3. Dispositif de production d'énergie selon la revendication 1 ou 2, **caractérisé en ce que**
- le corps rotatif (200) est réalisé de manière autodémarrante, et
- à cet effet de préférence au moins un segment de rotation (210 ; 211 ; 212) présente au moins deux éléments de démarrage (260, 261) opposés par rapport à l'axe de rotation pour augmenter une résistance au fluide dans la zone entourée de fluide, présente notamment une pluralité d'éléments de démarrage qui sont disposés sur une circonférence totale de l'au moins un segment de rotation, et plus préférentiellement
- les éléments de démarrage (260, 261) présentent un côté tourné vers le fluide (262) et un côté dirigé à l'opposé du fluide (263), dans lequel le côté tourné vers le fluide présente une résistance au fluide plus élevée que le côté dirigé à l'opposé du fluide.

4. Dispositif de production d'énergie selon l'une quelconque des revendications précédentes, **caractérisé en ce que**
- le corps rotatif est réalisé de manière à pouvoir être réduit en surface, et
- à cet effet, au moins l'un des segments de rotation est de préférence rempli de gaz et notamment une pression supérieure à une pression ambiante est présente dans une zone intérieure de l'au moins un élément de rotation rempli de gaz dans un état non réduit en surface et une réduction de surface est provoquée par un échange de gaz, et/ou
- à cet effet, au moins l'un des segments de rotation (210, 211, 212) sont de préférence réalisés de manière remplie d'une mousse à mémoire de forme, qui notamment dans un état non réduit en surface non comprimée et vise l'état non comprimé lorsqu'une force est exercée sur la mousse à mémoire de forme, notamment par un moyen de réduction de surface, et/ou
- à cet effet, au moins l'un des segments de rotation (210, 211, 212) sont de préférence réalisés avec une structure de grille pliable et élastique qui notamment dans un état non réduit en surface est non comprimée et vise l'état non comprimé lorsqu'une force est exercée sur la structure de grille, notamment par un moyen de réduction de surface.

5. Dispositif de production d'énergie selon l'une quelconque des revendications précédentes, **caractérisé en ce que**
- un moyen de réduction de surface (230, 240, 250) est disposé sur le corps rotatif, avec lequel la zone entourée de fluide des segments de rotation (210, 211, 212) est ajustable.

6. Dispositif de production d'énergie selon la revendication 5, **caractérisé en ce que** le moyen de réduction de surface est un moyen de réduction de surface dans la liste des moyens de réduction de surface présentant :
- un moyen de liaison mécanique (230), qui sont configurés pour relier mécaniquement des segments de rotation ;
- un système de vanne (240), qui est configuré pour provoquer une modification de la zone entourée de fluide par admission ou échappement d'un gaz ;
- un système à force de traction (250), qui est configuré pour comprimer au moins l'un des segments de rotation le long de l'axe de rotation au moyen d'une force de traction, notamment un système de câble de traction ou un système de tige.

7. Dispositif de production d'énergie selon l'une quelconque des revendications précédentes, **caractérisé en ce que**
- au moins l'un des segments de rotation (210, 211, 212) est réalisé de manière étanche au gaz et est rempli d'un gaz dont la densité est inférieure à celle de l'air, de préférence d'hélium, notamment pour produire une force de poussée du corps rotatif et pour régler un mode vol.

8. Dispositif de production d'énergie selon l'une quelconque des revendications précédentes, **caractérisé en ce que**
- les segments de rotation (210, 211, 212) sont réalisés de manière gonflable et présentent de préférence à cet effet au moins un segment de rotation, notamment tous les segments de rotation, une vanne d'introduction et d'évacuation d'un gaz, notamment d'introduction et d'évacuation d'air ou d'hélium.

9. Dispositif de production d'énergie selon l'une quelconque des revendications précédentes, **caractérisé en ce que**
- que les composants du corps rotatif (200) sont réalisés de telle sorte qu'un mode vol et un mode eau soient réglables avec le corps rotatif, dans lequel les segments de rotation (210, 211, 212) du corps rotatif (200) sont réalisés à cet effet en matériau léger résistant, de préférence en un film résistant, et/ou
le dispositif générateur (300) est réalisé de manière encapsulée.

10. Dispositif de production d'énergie selon l'une quelconque des revendications précédentes, **caractérisé en ce que**
- le dispositif de production d'énergie présente en outre un dispositif d'orientation de fluide qui est configuré pour orienter le corps rotatif (200) vers un courant de fluide variable, notamment un dispositif d'orientation au vent, et/ou
- le dispositif de production d'énergie présente un dispositif de stabilisation qui est configuré pour maintenir le corps rotatif (200) stable en mouvement dans le courant de fluide.

11. Dispositif de production d'énergie selon l'une quelconque des revendications précédentes, **caractérisé en ce que**
- le dispositif générateur (300) présente une partie rotative et une partie fixe, dans lequel la partie rotative est reliée mécaniquement au corps rotatif et la partie fixe présente des moyens de fixation pour la fixation à une structure de sol ou à un système de câble, et/ou
- le dispositif générateur (300) est réalisé pour être excité en permanence et est configuré pour délivrer un courant produit à un raccord électrique, et le générateur est de préférence réalisé comme un rotor externe.

12. Dispositif de production d'énergie selon l'une quelconque des revendications précédentes, **caractérisé en ce que**
- la surpression produite est produite avec une unité de production d'air comprimé ou une unité de production de chaleur, notamment avec un compresseur ou avec une bouteille d'air comprimé, dans lequel l'unité de production de chaleur ou d'air comprimé est réalisée de manière intégrée dans le corps rotatif ou est reliée au moyen de production de rotation par l'intermédiaire d'une conduite d'air comprimé, et/ou
- la surpression produite est produite avec une unité de production de pression solaire qui provoque une surpression par chauffage, dans lequel un air ambiant entrant dans une zone intérieure des segments de rotation est chauffé, et notamment à cet effet
- le corps rotatif ou les segments de rotation sont réalisés avec un film translucide pour introduire la lumière dans une zone intérieure du corps rotatif ou d'un ou plusieurs segments de rotation, et dans lequel une zone absorbant la lumière est prévue dans la zone intérieure, qui absorbe la lumière introduite et se réchauffe, et l'air ambiant circule d'une entrée à une sortie le long de la zone absorbant la lumière pour provoquer la surpression par une expansion de l'air ambiant par chauffage dans la zone intérieure du corps rotatif.

13. Corps rotatif (200) pour un dispositif de production d'énergie pour produire de l'énergie à partir d'un fluide en circulation, notamment à partir d'un courant de vent et/ou à partir d'un courant d'eau, dans lequel le corps rotatif (200) s'étend le long d'un axe de rotation entre un premier point et un deuxième point et le corps rotatif est configuré pour tourner autour de l'axe de rotation et le corps rotatif est réalisé à partir d'au moins un premier, un deuxième et un troisième segment de rotation (210, 211, 212), dans lequel les segments de rotation sont reliés entre eux et sont disposés le long de l'axe de rotation, et réalisent une zone au moins partiellement entourée de fluide, dans lequel le deuxième segment de rotation (211) est disposé entre le premier et le troisième segment de rotation (210, 212) et présente un diamètre différent du premier et du troisième segment de rotation (210, 212), notamment pour réaliser une forme de gâteau cylindrique à couches concentriques ou une forme sphérique ou une forme conique du corps rotatif, dans lequel le corps rotatif peut être relié mécaniquement à un dispositif générateur (300) qui est configuré pour produire de l'énergie qui est obtenue à partir de la rotation du corps rotatif, dans lequel le corps rotatif peut être relié mécaniquement au dispositif générateur (300) par l'intermédiaire d'un système de câble de traction, pour obtenir de l'énergie électrique à partir d'une force de poussée et/ou force propulsive résultant de la rotation du corps rotatif, **caractérisé en ce que** le corps rotatif (200) présente un moyen de production de rotation pour mettre ou maintenir le corps rotatif dans une rotation prédéterminée, dans lequel le moyen de production de rotation est configuré pour provoquer une impulsion de rotation rotative du corps rotatif, et le moyen de production de rotation
- est réalisé en tant que buse segmentée dirigée qui fait sortir une surpression produite d'une zone intérieure d'un segment de rotation et/ou
- est réalisé en tant que buse à air comprimé ou buse à air chaud qui entraîne mécaniquement le corps rotatif avec une surpression produite.

14. Corps rotatif selon la revendication 13, **caractérisé en ce qu'**il est réalisé comme le corps rotatif du dispositif de production d'énergie selon l'une quelconque des revendications 1 à 12 précédentes.
